(19) **Europäisches Patentamt**
**European Patent Office**
**Office européen des brevets**

(11) **EP 3 963 482 B1**

(12) **EUROPEAN PATENT SPECIFICATION**

(45) Date of publication and mention
of the grant of the patent:
**02.07.2025 Bulletin 2025/27**

(21) Application number: **20798961.7**

(22) Date of filing: **29.04.2020**

(51) International Patent Classification (IPC):
*G06F 17/10* *(2006.01)*

(52) Cooperative Patent Classification (CPC):
**G06F 17/10**

(86) International application number:
**PCT/US2020/030378**

(87) International publication number:
**WO 2020/223289 (05.11.2020 Gazette 2020/45)**

(54) **SYSTEM AND METHOD FOR AUTOMATIC DIFFERENTIATION OF HIGHER-ORDER FUNCTIONS**

SYSTEM UND VERFAHREN ZUR AUTOMATISCHEN DIFFERENZIERUNG VON FUNKTIONEN HÖHERER ORDNUNG

SYSTÈME ET PROCÉDÉ DE DIFFÉRENCIATION AUTOMATIQUE DE FONCTIONS D'ORDRE SUPÉRIEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2019 US 201962840387 P**

(43) Date of publication of application:
**09.03.2022 Bulletin 2022/10**

(73) Proprietors:
• **Purdue Research Foundation**
**West Lafayette, IN 47906 (US)**
• **National University of Ireland, Maynooth**
**Maynooth, County Kildare W23 F2K8 (IE)**

(72) Inventor: **PEARLMUTTER, Barak**
**Dublin 14, D14 FD76 (IE)**

(74) Representative: **Strehlke, Ingo Kurt**
**Von Rohr**
**Patentanwälte Partnerschaft mbB**
**Rüttenscheider Straße 62**
**45130 Essen (DE)**

(56) References cited:
**US-A1- 2008 163 188      US-A1- 2009 077 543**
**US-A1- 2009 077 543      US-A1- 2009 265 685**
**US-A1- 2015 285 901      US-B2- 8 281 299**

• **MANZYUK OLEKSANDR ET AL: "Perturbation confusion in forward automatic differentiation of higher-order functions", JOURNAL OF FUNCTIONAL PROGRAMMING, vol. 29, 17 March 2018 (2018-03-17), GB, XP093003295, ISSN: 0956-7968, Retrieved from the Internet <URL:https://arxiv.org/pdf/1211.4892v2.pdf> [retrieved on 20221130], DOI: 10.1017/ S095679681900008X**
• **ATILIM GUNES BAYDIN ET AL: "Automatic differentiation in machine learning: a survey", ARXIV.ORG, CORNELL UNIVERSITY LIBRARY, 201 OLIN LIBRARY CORNELL UNIVERSITY ITHACA, NY 14853, 20 February 2015 (2015-02-20), XP081351888**
• **OLIVIER DANVY ET AL: "Eta-expansion does The Trick", ACM TRANSACTIONS ON PROGRAMMING LANGUAGE AND SYSTEMS, ACM, NEW YORK, NY, vol. 18, no. 6, 1 November 1996 (1996-11-01), pages 730 - 751, XP058202880, ISSN: 0164-0925, DOI: 10.1145/236114.236119**

**(Cont. next page)**

- "Evaluating Derivatives : Principles and Techniques of Algorithmic Differentiation, Second Edition", 1 January 2008, SOCIETY FOR INDUSTRIAL AND APPLIED MATHEMATICS, ISBN: 978-0-89871-776-1, article GRIEWANK ANDREAS ET AL: "15. Implicit and Iterative Differentiation : Principles and Techniques of Algorithmic Differentiation, Second Edition", pages: 367 - 396, XP093003919, DOI: 10.1137/1.9780898717761.ch15

- "Evaluating Derivatives : Principles and Techniques of Algorithmic Differentiation, Second Edition", 1 January 2008, SOCIETY FOR INDUSTRIAL AND APPLIED MATHEMATICS, ISBN: 978-0-89871-776-1, article GRIEWANK ANDREAS ET AL: "3. Fundamentals of Forward and Reverse : Principles and Techniques of Algorithmic Differentiation, Second Edition", pages: 31 - 59, XP093003912, DOI: 10.1137/1.9780898717761.ch3

## EP 3 963 482 B1

**Description**

This application claims the benefit of priority of U.S. provisional application serial no. 62/840,387, filed on April 29.

GOVERNMENT LICENSE RIGHTS

This invention was made with government support under contract numbers IIS1522954 and IIS1734938 awarded by the National Science Foundation. The government has certain rights in the invention.

FIELD

The device and method disclosed in this document relates to computer processing systems and to a system and method for automatic differentiation of higher-order functions.

BACKGROUND

Unless otherwise indicated herein, the materials described in this section are not prior art to the claims in this application and are not admitted to the prior art by inclusion in this section.

The classical univariate derivative of a function $f : \mathbb{R} \to \mathbb{R}$ is a function $f' : \mathbb{R} \to \mathbb{R}$. Multivariate or vector calculus extends the notion of derivative to functions whose domains and/or ranges are aggregates, that is vectors, introducing notions like gradients, Jacobians, and Hessians. Differential geometry further extends the notion of derivatives to functions whose domains and/or ranges are-or can contain-functions.

Automatic differentiation (AD) is a collection of methods for computing the derivative of a function at a point when the function is expressed as a computer program. These techniques, once pursued mainly by a small quiet academic community, have recently moved to the forefront of deep learning, where more expressive languages can spawn new industries, efficiency improvements can save billions of dollars, and errors can have far-reaching consequences.

From its earliest days, AD has supported functions whose domains and/or ranges are aggregates. However, there is currently interest from application programmers (machine learning in particular) in applying AD to higher-order functions. Classical AD systems, such as ADIFOR, TAPENADE, were implemented for first-order languages like FORTRAN, C, and C++. However, such classical AD systems do not expose a derivative-taking operator as a higher-order function, let alone one that can take derivatives of higher-order functions. More recent AD systems, such as MYIA, and TANGENT, as well as the HASKELL AD package available on Cabal, the "Beautiful Differentiation" system, and the "Compiling to Categories" system, have been implemented for higher-order languages like SCHEME, ML, HASKELL, F♯, PYTHON, LUA, and JULIA. All these recent systems expose a derivative-taking operator as a higher-order function. However, they do not support taking derivatives of higher-order functions. Accordingly, what is needed is an AD system that exposes a derivative-taking operator as a higher-order function and supports taking derivatives of higher-order functions, and does so in a manner that reliably yields correct results.

The article according to MANZYUK OLEKSANDR ET AL: "Perturbation confusion in forward automatic differentiation of higher-order functions", JOURNAL OF FUNCTIONAL PROGRAMMING, vol. 29, 17 March 2018 (2018-03-17), XP093003295, GB ISSN: 0956-7968, DOI: 10.1017/S095679681900008X deals with perturbation confusion in forward automatic differentiation of higher-order functions. According to this article, Forward Automatic Differentiation (AD) is a technique for augmenting programs to compute derivatives.
The article according to ATILM GUNES BAYDIN ET AL: "Automatic differentiation in machine learning: a survey", ARXIV.ORG, CORNELL UNIVERSITY LIBRARY, 201 OLIN LIBRARY CORNELL UNIVERSITY ITHACA, NY 14853, 20 February 2015 (2015-02-20), XP081351888 deals with automatic differentiation. According to this article, derivatives, mostly in the form of gradients and Hessians, are ubiquitous in machine learning.
US 2009/0077543 A1 discloses a system providing a transformation-based implementation of a forward-mode and reverse-mode automatic differentiation as a built-in, first-class function in a functional programming language.
US 8,281,299 B2 discloses a system providing a functional programming construct that allows convenient modular run-time nonstandard interpretation via reflection on closure environments.
The article according to OLIVIER DANY ET AL: "Eta-expansion does The Trick", ACM TRANSACTIONS ON PROGRAMMING LANGUAGE AND SYSTEMS, ACM; NEW YORK; NY, vol. 18, no. 6, 1 November 1996 (1996-11-01), pages 730-751, XP058202880, ISSN: 0164-0925, DOI: 10.1145/236114.236119 deals with so-called Eta-expansion. In the article, the correctness of a partial evaluator for a lambda-calculus with products and disjoint sums has been proven.

SUMMARY

A method for automatic differentiation of a function defined by program code is disclosed in accordance with claim 1; further embodiments are the subject-matter of the respective dependent claims.
A system for automatic differentiation of a function defined by program code is disclosed in accordance with the respective independent claim.
A non-transitory computer readable medium for automatic differentiation of a function defined by program code is disclosed in accordance with the respective independent claim.

BRIEF DESCRIPTION OF THE DRAWINGS

The foregoing aspects and other features of the system and method are explained in the following description, taken in connection with the accompanying drawings.

FIG. 1 shows a block diagram of an exemplary embodiment of an automatic differentiation system.
FIG. 2 shows a flow diagram for a method for operating the automatic differentiation system.
FIGS. 3A-3B show program code for a first exemplary implementation of the automatic differentiation program.
FIGS. 4A-4C show program code for a second exemplary implementation of the automatic differentiation program.

DETAILED DESCRIPTION

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles of the disclosure as would normally occur to one skilled in the art which this disclosure pertains.

Introduction to Automatic Differentiation of Higher-Order Functions and its Challenges

As discussed in greater detail below, the disclosure provides two methods that that enable automatic differentiation of higher-order functions whose ranges and/or domains are functions. Moreover, the two methods may be extended to enable the differentiation of higher-order functions whose domains too are functions. In each case, these methods remedy a bug that would otherwise lead to the generation of incorrect results. An introduction to automatic differentiation techniques and to this bug are detailed below.
For expository purposes, we present this bug in the context of forward AD. However, the underlying issue can also manifest itself with other AD modes, including reverse AD of higher-order functions. The bug is insidious in that it can lead to production of incorrect results without warning.
Let D denote the true mathematical derivative operator. $\mathbb{D}$ is classically defined for first-order functions $\mathbb{R} \to \mathbb{R}$ in terms of limits, and thus this classical definition does not lend itself to direct implementation.

$$\mathbb{D}f = f' \qquad \text{where } f'(x) = \lim_{\epsilon \to 0} \frac{f(x+\epsilon) - f(x)}{\epsilon} \qquad (1)$$

We seek to materialize $\mathbb{D}$ as a program construct $\mathscr{D}$. We can view this classical limit definition as a specification of $\mathbb{D}$ and proceed to develop an *implementation* of $\mathscr{D}$. Below, we use = to denote mathematical equality, $\triangleq$ to denote definition of program constructs, and $\Rightarrow$ to denote evaluation.
One can extend $\mathbb{D}$ to functions $\mathbb{R} \to \alpha$, where:

$$\alpha ::= \mathbb{R} \mid \alpha_1 \to \alpha_2 \qquad (2)$$

Since by equation (2) any type $\alpha$ must be of the form $\alpha_1 \to \cdots \to \alpha_n \to \mathbb{R}$, functions $\mathbb{R} \to \alpha_2$ can be viewed as multivariate $\mathbb{R} \to \alpha_2 \to \cdots \to \alpha_n \to \mathbb{R}$ whose first argument domain is $\mathbb{R}$ and whose range is $\mathbb{R}$. We take $\mathbb{D}f$ where $f: \mathbb{R} \to \alpha_2 \to \cdots \to \alpha_n \to \mathbb{R}$ to be the partial derivative with respect to the first argument.

$$\mathbb{D}f = \frac{\partial f(x_1, x_2, \ldots, x_n)}{\partial x_1} \qquad (3)$$

We will see below that a $\mathscr{D}$ can be implemented that appears to coincide with the specification $\mathbb{D}$ in equation (1) for functions $\mathbb{R} \to \mathbb{R}$, but then fails to coincide with the specification $\mathbb{D}$ in equation (3) for functions $\mathbb{R} \to \alpha$.

Forward AD can be formulated as differential algebra. Its essence is as follows.

Complex numbers can be represented as pairs of real numbers that form an algebra over two-term polynomials $a + bi$ where $i^2 = -1$. Arithmetic proceeds by simple rules, derived algebraically.

$$(a + bi) + (c + di) = (a + c) + (b + d)i \qquad (4a)$$

$$(a + bi)(c + di) = ac + (ad + bc)i + bdi^2 = (ac - bd) + (ad + bc)i \qquad (4b)$$

Complex numbers can be implemented in a computer as ordered pairs $(a, b)$, sometimes called Argand pairs. Since arithmetic over complex numbers is defined in terms of arithmetic over the reals, the above rules imply that computation over complex numbers is closed.

*Dual numbers* can be represented in the form $a + b\varepsilon$. In a dual number, the coefficient of $\varepsilon$ is called a *perturbation* or a *tangent*. These can similarly be viewed as an algebra over two-term polynomials where $\varepsilon^2 = 0$ but $\varepsilon \neq 0$. Arithmetic over dual numbers is again defined by simple rules derived algebraically.

$$(a + b\epsilon) + (c + d\epsilon) = (a + c) + (b + d)\epsilon \qquad (5a)$$

$$(a + b\epsilon)(c + d\epsilon) = ac + (ad + bc)\epsilon + bd\epsilon^2 = ac + (ad + bc)\epsilon \qquad (5b)$$

Like complex numbers, dual numbers can be implemented in a computer as ordered pairs $(a, b)$. Likewise, since arithmetic over dual numbers is defined in terms of arithmetic over the reals, the above rules imply that computation over dual numbers is closed.

The essence of forward AD is viewing dual numbers as truncated two-term power series. Since, following Taylor, $f(x_0 + x_1\varepsilon + O(\varepsilon^2)) = f(x_0) + x_1 f'(x_0)\varepsilon + O(\varepsilon^2)$, applying $f$ to a dual number $a + 1\varepsilon$ will yield a dual number $f(a) + f'(a)\varepsilon$. This leads to the following method for computing derivatives of functions $f: \mathbb{R} \to \mathbb{R}$ expressed as computer programs.

Given a programming language that supports dual numbers and arithmetic thereupon, $f'$ at a point $a$ can be computed by (Step 1) forming $a + 1\varepsilon$, (Step 2) applying $f$ to $a + 1\varepsilon$ to obtain a result $f(a) + f'(a)\varepsilon$, and (Step 3) extracting the tangent, $f'(a)$, from the result.

Step 2 constitutes a nonstandard interpretation of the arithmetic basis functions with equations (5a) and (5b). This can be implemented in various ways, for example, overloading or source-code transformation. Further, dual numbers can be represented in various ways, for example, as unboxed flattened values or as boxed values referenced through pointers. These different implementation strategies do not concern us here. While different implementation strategies have different costs, what we discuss applies to all strategies.

It is convenient to encapsulate Steps 1-3 as a higher-order function $\mathscr{D} : f \mapsto f'$. Indeed, that is one of the original motivations for the development of the lambda calculus. We can do this with the following code that implements $\mathscr{D}$.

$$\mathbf{tg}\ a \triangleq 0 \qquad\qquad a : \mathbb{R} \qquad (6a)$$

$$\mathbf{tg}\ (a + b\epsilon) \triangleq b \qquad (6b)$$

$$\mathscr{D}f\ x \triangleq \mathbf{tg}\ (f\ (x + 1\epsilon)) \qquad (6c)$$

Here, $x + 1_\varepsilon$ denotes Step 1 above, that is, constructing a dual number, and **tg** $(a + b\varepsilon)$ denotes Step 3 above, that is, extracting the tangent of a dual number. Equation (6a) handles the case where the output of *f* is independent of the input *x*.

Forward AD provides certain complexity guarantees. Steps 1 and 3 take unit time. Step 2 introduces no more than a constant factor increase in both the space and time complexity of executing *f* under a nonstandard interpretation. Thus, computing *f x* and $\mathscr{D}$ *f x* have the same space and time complexity.

In one implementation, dual numbers are tagged to avoid perturbation confusion. It is natural to nest application of $\mathscr{D}$. Doing so would allow taking higher-order derivatives and, more generally, derivatives of functions that take derivatives of other functions.

$$\mathscr{D}\left(\lambda x. \ldots \mathscr{D}\left(\lambda y. \ldots\right)\ldots\right)\ldots \qquad (7)$$

This can lead to perturbation confusion, yielding an incorrect result. The essence of perturbation confusion is that each invocation, calculation, and/or execution of $\mathscr{D}$ must perform its computation over a distinct differential algebra. While it is possible to reject programs that would exhibit perturbation confusion using static typing, and static typing can be used to yield the desired correct result in some cases with some user annotation, no static method is known that can yield the desired correct result in all cases without any annotation. It is possible, however, to get the correct result in all cases (except, as we shall see, when taking derivatives of functions whose ranges are functions) without user annotation, by redefining **tg** and $\mathscr{D}$ to tag dual numbers with distinct $\varepsilon$s to obtain distinct differential algebras (or equivalently, distinct generators in a differential algebra) introduced by different invocations of $\mathscr{D}$. We will indicate different tags by different subscripts on $\varepsilon$, and use $\varepsilon$ to denote a variable that is bound to an $\varepsilon$.

$$\mathbf{tg}\ \varepsilon\ a \stackrel{\triangle}{=} 0 \qquad\qquad a:\mathbb{R} \qquad (8a)$$

$$\mathbf{tg}\ \varepsilon\ (a + b\varepsilon) \stackrel{\triangle}{=} b \qquad\qquad (8b)$$

$$\mathbf{tg}\ \varepsilon_1\ (a + b\varepsilon_2) \stackrel{\triangle}{=} (\mathbf{tg}\ \varepsilon_1\ a) + (\mathbf{tg}\ \varepsilon_1\ b)\varepsilon_2 \qquad\qquad \varepsilon_1 \neq \varepsilon_2 \qquad (8c)$$

$$\mathscr{D}\ f\ x \stackrel{\triangle}{=} \mathbf{fresh}\ \varepsilon\ \mathbf{in}\ \mathbf{tg}\ \varepsilon\ (f\ (x + 1\varepsilon)) \qquad (8d)$$

These redefine equations (6a), (6b), and (6c). Here, the tags are generated dynamically. Prior to this change, that is with only a single $\varepsilon$, the values *a* and *b* in a dual number $a + b\varepsilon$ would be real numbers. With this change, that is with multiple $\varepsilon$s, the values *a* and *b* in a dual number $a + b\varepsilon_1$ can be dual numbers over $\varepsilon_2$ where $\varepsilon_2 \neq \varepsilon_1$. Such a tree of dual numbers will contain real numbers in its leaves and will contain a given $\varepsilon$ only once along each path from the root to the leaves. Equation (8c) provides the ability to extract the tangent of an $\varepsilon$ that might not be at the root of the tree.

This can be extended to higher-order functions whose range is a function, or in other words, to cases in which *f x* returns a function g which takes an argument *y*. If one applies $\mathscr{D}$ to a function *f* whose range is a function, then $f(x + 1\varepsilon)$ in equation (8d) will yield a function $\bar{g}$ which takes the argument *y*. Thus, an invocation of $\mathscr{D}$ *f x* yields a function $\bar{g}$ which takes the argument *y* and which itself performs a derivative calculation with respect to function *f x* when invoked. It will not be possible to extract the tangent of this with **tg** as implemented by equations (8a), (8b), and (8c). The definition of **tg** can be augmented to handle this case by post-composition.

$$\mathbf{tg}\ \varepsilon\ \bar{g} \stackrel{\triangle}{=} (\mathbf{tg}\ \varepsilon) \circ \bar{g} \qquad\qquad \bar{g}\ \text{is a function} \qquad (8e)$$

However, this extension (alone) is flawed, as we proceed to demonstrate. Particularly, consider the following commonly occurring mathematical situation. We define an offset operator:

$$s : \mathbb{R} \to (\mathbb{R} \to \mathbb{R}) \to \mathbb{R} \to \mathbb{R}$$

$$s \, u \, f \, x \stackrel{\triangle}{=} f\,(x + u) \tag{9}$$

The derivative of s at zero should be the same as the derivative operator, that is, $\mathbb{D}\,s\,0 = \mathbb{D}$ , since:

$$(\forall f)(\forall y)\mathbb{D}\,s\,0\,f\,y = \tfrac{\partial}{\partial u}[\,s\,u\,f\,y\,]_{u=0} = \tfrac{\partial}{\partial u}[f\,(y+u)\,]_{u=0} = f'(y) = \mathbb{D}\,f\,y \tag{10a}$$

$$\Longleftrightarrow \qquad \{\mathrm{eta}\}$$

$$(\forall f)\mathbb{D}\,s\,0\,f = \mathbb{D}\,f \tag{10b}$$

$$\Longleftrightarrow \qquad \{\mathrm{eta}\}$$

$$\mathbb{D}\,s\,0 = \mathbb{D} \tag{10c}$$

Thus, if we define

$$\hat{\mathscr{D}} \stackrel{\triangle}{=} \mathscr{D}\,s\,0 \tag{11}$$

we would hope that $\hat{\mathscr{D}} = \mathscr{D}$. However, we exhibit an example where it does not.

We can compute $\hat{\mathscr{D}}\,(\hat{\mathscr{D}}\,h)\,y$ for $h : \mathbb{R} \to \mathbb{R}$ with simple reduction steps. Particularly, $\hat{\mathscr{D}}$ is computed according to the steps:

$$\hat{\mathscr{D}}$$

$$\Longrightarrow \qquad \{\text{by }(11)\}$$

$$\mathscr{D}\,s\,0 \tag{12a}$$

$$\Longrightarrow \qquad \{\text{by }(8\text{d})\}$$

$$\mathbf{fresh}\;\varepsilon\;\mathbf{in}\;\mathbf{tg}\;\varepsilon\;(s\,(0 + 1\varepsilon)) \tag{12b}$$

$$\Longrightarrow \qquad \{\text{allocate a fresh tag } \epsilon_0; \text{ this is problematic; see discussion below}\}$$

$$\mathbf{tg}\;\epsilon_0\;(s\,(0 + 1\epsilon_0)) \tag{12c}$$

$$\Longrightarrow \qquad \{\text{by }(9)\}$$

$$\mathbf{tg}\;\epsilon_0\;(\lambda f \,.\, \lambda x \,.\, (f\,(x + 1\epsilon_0))) \tag{12d}$$

$$\Longrightarrow \qquad \{\text{by }(8\text{e})\}$$

$$(\mathbf{tg}\;\epsilon_0) \circ (\lambda f \,.\, \lambda x \,.\, (f\,(x + 1\epsilon_0))) \tag{12e}$$

$$\Longrightarrow \qquad \{\text{postcompose}\}$$

$$\lambda f \,.\, \lambda x \,.\, \mathbf{tg}\;\epsilon_0\;(f\,(x + 1\epsilon_0)) \tag{12f}$$

Next, $\hat{\mathscr{D}}\,(\hat{\mathscr{D}}\,h)\,y$ is computed according to the steps:

$$\hat{\mathscr{D}}\,(\hat{\mathscr{D}}\,h)\,y$$

$$\Longrightarrow \qquad \{\text{substitute (12f) for } \hat{\mathscr{D}}\}$$

$$(\lambda f \,.\, \lambda x \,.\, \mathbf{tg}\ \epsilon_0\ (f\ (x + 1\epsilon_0)))\ ((\lambda f \,.\, \lambda x \,.\, \mathbf{tg}\ \epsilon_0\ (f\ (x + 1\epsilon_0)))\ h)\ y \qquad (12\text{g})$$

$$\Longrightarrow \qquad \{\text{beta reduce}\}$$

$$(\lambda f \,.\, \lambda x \,.\, \mathbf{tg}\ \epsilon_0\ (f\ (x + 1\epsilon_0)))\ (\lambda x \,.\, \mathbf{tg}\ \epsilon_0\ (h\ (x + 1\epsilon_0)))\ y \qquad (12\text{h})$$

$$\Longrightarrow \qquad \{\text{beta reduce}\}$$

$$(\lambda x \,.\, \mathbf{tg}\ \epsilon_0\ ((\lambda x \,.\, \mathbf{tg}\ \epsilon_0\ (h\ (x + 1\epsilon_0)))\ (x + 1\epsilon_0)))\ y \qquad (12\text{i})$$

$$\Longrightarrow \qquad \{\text{beta reduce}\}$$

$$\mathbf{tg}\ \epsilon_0\ ((\lambda x \,.\, \mathbf{tg}\ \epsilon_0\ (h\ (x + 1\epsilon_0)))\ (y + 1\epsilon_0)) \qquad (12\text{j})$$

$$\Longrightarrow \qquad \{\text{beta reduce}\}$$

$$\mathbf{tg}\ \epsilon_0\ (\mathbf{tg}\ \epsilon_0\ (h\ ((y + 1\epsilon_0) + 1\epsilon_0))) \qquad (12\text{k})$$

$$\Longrightarrow \qquad \{\text{add dual numbers}\}$$

$$\mathbf{tg}\ \epsilon_0\ (\mathbf{tg}\ \epsilon_0\ (h\ (y + 2\epsilon_0))) \qquad (12\text{l})$$

$$\Longrightarrow \qquad \{\text{apply } h \text{ to a dual number}\}$$

$$\mathbf{tg}\ \epsilon_0\ (\mathbf{tg}\ \epsilon_0\ (h(y) + 2h'(y)\epsilon_0)) \qquad (12\text{m})$$

$$\Longrightarrow \qquad \{\text{by (8b)}\}$$

$$\mathbf{tg}\ \epsilon_0\ (2h'(y)) \qquad (12\text{n})$$

$$\Longrightarrow \qquad \{\text{by (8a)}\}$$

$$0 \qquad (12\text{o})$$

As can be seen, this went wrong, yielding 0 instead of $h''(y)$. Particularly:

$$\hat{\mathscr{D}}\,(\hat{\mathscr{D}}\,h)\,y \Longrightarrow 0 \neq \mathbb{D}\,(\mathbb{D}\,h)\,y = h''(y) \qquad (13)$$

The process of allocating a fresh tag in step (12d) was problematic. The proper way to handle such fresh tag allocation might be to use nominal logic, perhaps in a dependent-type-theoretic variant. Below, we offer alternate mechanisms that are suitable for use in programming-language implementations that lack type systems that support first class names and binding.

This is not an artificial example. It is quite natural to construct an *x*-axis differential operator and apply it to a two-dimensional function twice, along the *x* and then *y* axis directions, by applying the operator, flipping the axes, and applying the operator again, thus creating precisely this sort of cascaded use of a defined differential operator.

This incorrect result was due to the tag $\varepsilon_0$ being generated exactly *once*, in equation (12b), when $\widehat{\mathscr{D}}$ was calculated from $\mathscr{D}\,s\,0$ as equations (12a)-(12f) using the definition of equation (11). The invocation $\mathscr{D}\,s\,0$ is the point at which a fresh tag is introduced; early instantiation can result in reuse of the same tag in logically distinct derivative calculations. Here, the first derivative and the second derivative become confused at equation (12l). We have two nested applications of **tg** for $\varepsilon_0$, but for correctness these should be distinctly tagged: $\varepsilon_0$ versus $\varepsilon_1$.

This can be accomplished by making two copies of $\widehat{\mathscr{D}}$ by evaluating $\mathscr{D}\,s\,0$ twice. Performing an analogous computation with two copies of $\widehat{\mathscr{D}}$ yields the correct result. Particularly, $\widehat{\mathscr{D}}_0$ is computed according to the steps:

$$\hat{\mathscr{D}}_0$$

$$\implies \qquad \{\text{repeat (12a)}\}$$

$$\mathscr{D}\, s\, 0 \qquad\qquad (14a)$$

$$\implies \qquad \{\text{repeat (12b)}\}$$

$$\textbf{fresh } \varepsilon \textbf{ in tg } \varepsilon\, (s\, (0 + 1\varepsilon)) \qquad\qquad (14b)$$

$$\implies \qquad \{\text{repeat (12c)}\}$$

$$\textbf{tg } \epsilon_0\, (s\, (0 + 1\epsilon_0)) \qquad\qquad (14c)$$

$$\implies \qquad \{\text{repeat (12d)}\}$$

$$\textbf{tg } \epsilon_0\, (\lambda f\,.\,\lambda x\,.\,(f\,(x + 1\epsilon_0))) \qquad\qquad (14d)$$

$$\implies \qquad \{\text{repeat (12e)}\}$$

$$(\textbf{tg } \epsilon_0) \circ (\lambda f\,.\,\lambda x\,.\,(f\,(x + 1\epsilon_0))) \qquad\qquad (14e)$$

$$\implies \qquad \{\text{repeat (12f)}\}$$

$$\lambda f\,.\,\lambda x\,.\,\textbf{tg } \epsilon_0\, (f\,(x + 1\epsilon_0)) \qquad\qquad (14f)$$

Next, $\widehat{\mathscr{D}}_1$ is computed according to the steps:

$$\hat{\mathscr{D}}_1$$

$$\implies \qquad \{\text{repeat (12a)}\}$$

$$\mathscr{D}\, s\, 0 \qquad\qquad (14g)$$

$$\implies \qquad \{\text{repeat (12b)}\}$$

$$\textbf{fresh } \varepsilon \textbf{ in tg } \varepsilon\, (s\, (0 + 1\varepsilon)) \qquad\qquad (14h)$$

$$\implies \qquad \{\text{repeat (12c)}\}$$

$$\textbf{tg } \epsilon_1\, (s\, (0 + 1\epsilon_1)) \qquad\qquad (14i)$$

$$\implies \qquad \{\text{repeat (12d)}\}$$

$$\textbf{tg } \epsilon_1\, (\lambda f\,.\,\lambda x\,.\,(f\,(x + 1\epsilon_1))) \qquad\qquad (14j)$$

$$\implies \qquad \{\text{repeat (12e)}\}$$

$$(\textbf{tg } \epsilon_1) \circ (\lambda f\,.\,\lambda x\,.\,(f\,(x + 1\epsilon_1))) \qquad\qquad (14k)$$

$$\implies \qquad \{\text{repeat (12f)}\}$$

$$\lambda f\,.\,\lambda x\,.\,\textbf{tg } \epsilon_1\, (f\,(x + 1\epsilon_1)) \qquad\qquad (14l)$$

Finally, $\widehat{\mathscr{D}}_0(\widehat{\mathscr{D}}_1 h)y$ is computed according to the steps:

$$\hat{\mathscr{D}}_0 \, (\hat{\mathscr{D}}_1 \, h) \, y$$

$\implies \quad \{\text{substitute (14f) and (14l) for } \hat{\mathscr{D}}\}$

$$(\lambda f \, . \, \lambda x \, . \, \mathbf{tg} \; \epsilon_0 \; (f \, (x + 1\epsilon_0))) \, ((\lambda f \, . \, \lambda x \, . \, \mathbf{tg} \; \epsilon_1 \; (f \, (x + 1\epsilon_1))) \, h) \, y \tag{14m}$$

$\implies \quad \{\text{beta reduce}\}$

$$(\lambda f \, . \, \lambda x \, . \, \mathbf{tg} \; \epsilon_0 \; (f \, (x + 1\epsilon_0))) \, (\lambda x \, . \, \mathbf{tg} \; \epsilon_1 \; (h \, (x + 1\epsilon_1))) \, y \tag{14n}$$

$\implies \quad \{\text{beta reduce}\}$

$$(\lambda x \, . \, \mathbf{tg} \; \epsilon_0 \; ((\lambda x \, . \, \mathbf{tg} \; \epsilon_1 \; (h \, (x + 1\epsilon_1))) \, (x + 1\epsilon_0))) \, y \tag{14o}$$

$\implies \quad \{\text{beta reduce}\}$

$$\mathbf{tg} \; \epsilon_0 \; ((\lambda x \, . \, \mathbf{tg} \; \epsilon_1 \; (h \, (x + 1\epsilon_1))) \, (y + 1\epsilon_0)) \tag{14p}$$

$\implies \quad \{\text{beta reduce}\}$

$$\mathbf{tg} \; \epsilon_0 \; (\mathbf{tg} \; \epsilon_1 \; (h \, ((y + 1\epsilon_0) + 1\epsilon_1))) \tag{14q}$$

$\implies \quad \{\text{apply } h \text{ to a dual number}\}$

$$\mathbf{tg} \; \epsilon_0 \; (\mathbf{tg} \; \epsilon_1 \; (h(y + 1\epsilon_0) + h'(y + 1\epsilon_0)\epsilon_1)) \tag{14r}$$

$\implies \quad \{\text{apply } h \text{ to a dual number}\}$

$$\mathbf{tg} \; \epsilon_0 \; (\mathbf{tg} \; \epsilon_1 \; ((h(y) + h'(y)\epsilon_0) + h'(y + 1\epsilon_0)\epsilon_1)) \tag{14s}$$

$\implies \quad \{\text{apply } h \text{ to a dual number}\}$

$$\mathbf{tg} \; \epsilon_0 \; (\mathbf{tg} \; \epsilon_1 \; ((h(y) + h'(y)\epsilon_0) + (h'(y) + h''(y)\epsilon_0)\epsilon_1)) \tag{14t}$$

$\implies \quad \{\text{by (8b)}\}$

$$\mathbf{tg} \; \epsilon_0 \; (h'(y) + h''(y)\epsilon_0) \tag{14u}$$

$\implies \quad \{\text{by (8b)}\}$

$$h''(y) \tag{14v}$$

Here, equation (14r) corrects the mistake in equation (12l).

However, this is tantamount to requiring the user to manually write

$$\mathbf{let} \; \hat{\mathscr{D}}_0 \stackrel{\triangle}{=} \mathscr{D} \, s \, 0 \tag{15}$$
$$\mathbf{in \, let} \; \hat{\mathscr{D}}_1 \stackrel{\triangle}{=} \mathscr{D} \, s \, 0$$
$$\mathbf{in} \; \hat{\mathscr{D}}_0 \, (\hat{\mathscr{D}}_1 \, h) \, y$$

instead of:

$$\mathbf{let} \; \hat{\mathscr{D}} \stackrel{\triangle}{=} \mathscr{D} \, s \, 0 \tag{16}$$
$$\mathbf{in} \; \hat{\mathscr{D}} \, (\hat{\mathscr{D}} \, h) \, y$$

This should not be necessary since if $\mathscr{D}$ correctly implemented $\mathbb{D}$. Particularly, $\widehat{\mathscr{D}}_0$ and $\widehat{\mathscr{D}}_1$ should be equivalent when $\mathscr{D}$ correctly implements $\mathbb{D}$.

The essence of the bug is that the implementation of $\mathscr{D}$ in equation (8d) only generates a distinct $\varepsilon$ for each invocation $\mathscr{D}$ *f x*, but a distinct $\varepsilon$ is instead needed for each derivative calculation. In the first-order case, when

$f : \mathbb{R} \to \mathbb{R}$, these are equivalent. Each invocation $\mathscr{D} f x$ leads to a single derivative calculation. But in the higher-order case, when $f$ returns a function g, an invocation $\mathscr{D} f x$ yields $\overline{g}$ which performs a derivative calculation when invoked. Since $\overline{g}$ can be invoked multiple times, each such invocation will perform a distinct derivative calculation and needs a distinct $\varepsilon$.

Methods for more accurately implementing $\mathbb{D}$ are described below. The methods described below extend AD to support functions whose domains and/or ranges are functions and, importantly, remedy the insidious bug described above. Thus, these methods enable AD that is completely general and which can be applied in an unrestricted fashion to correctly compute the derivative of all programs that compute differentiable mathematical functions. This includes application to functions whose domain and/or ranges include the entire space of data types supported by programming languages, including not only aggregates but also functions.

First Method of Improved Automatic Differentiation of Higher-Order Functions

A first method for resolving the bug described above is to eta expand the definition of $\mathscr{D}$. Such eta expansion would need to be conditional on the return type of *f*.

$$\mathscr{D}_1 : (\mathbb{R} \to \mathbb{R}) \to \mathbb{R} \to \mathbb{R}$$
$$\mathscr{D}_1 f \, x_1 \stackrel{\triangle}{=} \textbf{fresh } \varepsilon \textbf{ in } \textbf{tg } \varepsilon \, (f \, (x_1 + 1\varepsilon)) \tag{17a}$$

$$\mathscr{D}_2 : (\mathbb{R} \to \alpha_2 \to \mathbb{R}) \to \mathbb{R} \to \alpha_2 \to \mathbb{R}$$
$$\mathscr{D}_2 f \, x_1 \, x_2 \stackrel{\triangle}{=} \textbf{fresh } \varepsilon \textbf{ in } \textbf{tg } \varepsilon \, (f \, (x_1 + 1\varepsilon) \, x_2) \tag{17b}$$

$$\mathscr{D}_3 : (\mathbb{R} \to \alpha_2 \to \alpha_3 \to \mathbb{R}) \to \mathbb{R} \to \alpha_2 \to \alpha_3 \to \mathbb{R}$$
$$\mathscr{D}_3 f \, x_1 \, x_2 \, x_3 \stackrel{\triangle}{=} \textbf{fresh } \varepsilon \textbf{ in } \textbf{tg } \varepsilon \, (f \, (x_1 + 1\varepsilon) \, x_2 \, x_3) \tag{17c}$$

$$\vdots$$

It should be appreciated the "eta expansion" refers to a process of syntactically expanding an expression. In particular, the eta expansion of an expression E refers to the transformation of the expression into the expanded expression $\lambda v.\ Ev$, where the variable $v$ is fresh and E: $\alpha \to \beta$. The expression E must be a function. Eta expansion delays the evaluation of E until the function is applied, and will re-evaluate E each time the function is applied.

As noted above, if one applies $\mathscr{D}$ to a higher-order function $f x$ that returns a function g which takes an argument $y$, then $f(x + 1\varepsilon)$ in equation (8d) will yield a function $\overline{g}$ which takes the argument $y$. Thus, an invocation of $\mathscr{D} f x$ yields a function $\overline{g}$ which takes the argument $y$ and which itself performs a derivative calculation with respect to function $f x$ when invoked. It will not be possible to extract the tangent of this with **tg** as implemented by equations (8a), (8b), and (8c). However, with such eta expansion conditioned on the return type of $f$, this situation can be avoided and equation (8e) is not needed, because the appropriate variant of $\mathscr{D}$ should only be invoked in a context that contains all arguments necessary to subsequently allow the call to **tg** in that invocation of $\mathscr{D}$ to yield to a non-function-containing value. This seemingly infinite set of $\mathscr{D}_i$ and associated definitions can be formulated as a single $\mathscr{D}$ with polymorphic recursion.

$$\mathscr{D} f \, x \stackrel{\triangle}{=} \lambda y . (\mathscr{D} (\lambda x . (f \, x \, y)) \, x) \qquad (f \, x) \text{ is a function} \tag{18a}$$

$$\mathscr{D} f \, x \stackrel{\triangle}{=} \textbf{fresh } \varepsilon \textbf{ in } \textbf{tg } \varepsilon \, (f \, (x + 1\varepsilon)) \qquad (f \, x) \text{ is not a function} \tag{18b}$$

We can see that this resolves the bug in equations (12a)-(12o) and accomplishes the desiderata in equations (14a)-(14l) without making two copies of $\widehat{\mathscr{D}}$. Particularly, $\widehat{\mathscr{D}}$ is computed according to the steps:

$$\hat{\mathscr{D}}$$

$\Longrightarrow \qquad \{\text{by } (11)\}$

$$\mathscr{D}\, s\, 0 \qquad\qquad\qquad\qquad\qquad\qquad\qquad (19a)$$

$\Longrightarrow \qquad \{\text{by } (18a)\}$

$$\lambda y \,.\, (\mathscr{D}\,(\lambda x \,.\, (s\, x\, y))\, 0) \qquad\qquad\qquad (19b)$$

Next, $\widehat{\mathscr{D}}\,(\widehat{\mathscr{D}}\, h)\, y$ is computed according to the steps:

$$\hat{\mathscr{D}}\,(\hat{\mathscr{D}}\, h)\, y$$

$\Longrightarrow \qquad \{\text{substitute } (19b)\ \text{for}\ \hat{\mathscr{D}}\}$

$$(\lambda y \,.\, (\mathscr{D}\,(\lambda x \,.\, (s\, x\, y))\, 0))\,((\lambda y \,.\, (\mathscr{D}\,(\lambda x \,.\, (s\, x\, y))\, 0))\, h)\, y \qquad (19c)$$

$\Longrightarrow \qquad \{\text{beta reduce}\}$

$$(\lambda y \,.\, (\mathscr{D}\,(\lambda x \,.\, (s\, x\, y))\, 0))\,(\mathscr{D}\,(\lambda x \,.\, (s\, x\, h))\, 0)\, y \qquad (19d)$$

$\Longrightarrow \qquad \{\text{beta reduce}\}$

$$(\mathscr{D}\,(\lambda x \,.\, (s\, x\, (\mathscr{D}\,(\lambda x \,.\, s\, x\, h)\, 0)))\, 0)\, y \qquad\qquad (19e)$$

$\Longrightarrow \qquad \{\text{by } (8d)\}$

$$(\textbf{fresh}\ \varepsilon\ \textbf{in tg}\ \varepsilon\,((\lambda x \,.\, (s\, x\, (\mathscr{D}\,(\lambda x \,.\, (s\, x\, h))\, 0)))\,(0 + 1\varepsilon)))\, y \qquad (19f)$$

$\Longrightarrow \qquad \{\text{allocate a fresh tag}\ \epsilon_0\}$

$$(\textbf{tg}\ \epsilon_0\,((\lambda x \,.\, (s\, x\, (\mathscr{D}\,(\lambda x \,.\, (s\, x\, h))\, 0)))\,(0 + 1\epsilon_0)))\, y \qquad (19g)$$

$\Longrightarrow \qquad \{\text{beta reduce}\}$

$$(\textbf{tg}\ \epsilon_0\,(s\,(0 + 1\epsilon_0)\,(\mathscr{D}\,(\lambda x \,.\, (s\, x\, h))\, 0)))\, y \qquad\qquad (19h)$$

$$\Longrightarrow \quad \{\text{by (8d)}\}$$

$$(\textbf{tg} \ \epsilon_0 \ (s \ (0 + 1\epsilon_0) \ (\textbf{fresh} \ \varepsilon \ \textbf{in} \ \textbf{tg} \ \varepsilon \ ((\lambda x \, . \, (s \, x \, h)) \ (0 + 1\varepsilon))))) \, y \tag{19i}$$

$$\Longrightarrow \quad \{\text{allocate a fresh tag } \epsilon_1\}$$

$$(\textbf{tg} \ \epsilon_0 \ (s \ (0 + 1\epsilon_0) \ (\textbf{tg} \ \epsilon_1 \ ((\lambda x \, . \, (s \, x \, h)) \ (0 + 1\epsilon_1))))) \, y \tag{19j}$$

$$\Longrightarrow \quad \{\text{beta reduce}\}$$

$$(\textbf{tg} \ \epsilon_0 \ (s \ (0 + 1\epsilon_0) \ (\textbf{tg} \ \epsilon_1 \ (s \ (0 + 1\epsilon_1) \, h)))) \, y \tag{19k}$$

$$\Longrightarrow \quad \{\text{by (9)}\}$$

$$(\textbf{tg} \ \epsilon_0 \ (s \ (0 + 1\epsilon_0) \ (\textbf{tg} \ \epsilon_1 \ (\lambda x \, . \, (h \, (x + (0 + 1\epsilon_1))))))) \, y \tag{19l}$$

$$\Longrightarrow \quad \{\text{by (8e)}\}$$

$$(\textbf{tg} \ \epsilon_0 \ (s \ (0 + 1\epsilon_0) \ (\textbf{tg} \ \epsilon_1) \circ (\lambda x \, . \, (h \, (x + (0 + 1\epsilon_1)))))) \, y \tag{19m}$$

$$\Longrightarrow \quad \{\text{postcompose}\}$$

$$(\textbf{tg} \ \epsilon_0 \ (s \ (0 + 1\epsilon_0) \ (\lambda x \, . \, (\textbf{tg} \ \epsilon_1 \ (h \, (x + (0 + 1\epsilon_1))))))) \, y \tag{19n}$$

$$\Longrightarrow \quad \{\text{by (9)}\}$$

$$(\textbf{tg} \ \epsilon_0 \ (\lambda x \, . \, ((\lambda x \, . \, (\textbf{tg} \ \epsilon_1 \ (h \, (x + (0 + 1\epsilon_1))))) \ (x + (0 + 1\epsilon_0))))) \, y \tag{19o}$$

$$\Longrightarrow \quad \{\text{beta reduce}\}$$

$$(\textbf{tg} \ \epsilon_0 \ (\lambda x \, . \, (\textbf{tg} \ \epsilon_1 \ (h \, ((x + (0 + 1\epsilon_0)) + (0 + 1\epsilon_1)))))) \, y \tag{19p}$$

$$\Longrightarrow \quad \{\text{by (8e)}\}$$

$$(\textbf{tg} \ \epsilon_0) \circ (\lambda x \, . \, (\textbf{tg} \ \epsilon_1 \ (h \, ((x + (0 + 1\epsilon_0)) + (0 + 1\epsilon_1))))) \, y \tag{19q}$$

$$\Longrightarrow \quad \{\text{postcompose}\}$$

$$(\lambda x \, . \, (\textbf{tg} \ \epsilon_0 \ (\textbf{tg} \ \epsilon_1 \ (h \, ((x + (0 + 1\epsilon_0)) + (0 + 1\epsilon_1)))))) \, y \tag{19r}$$

$$\Longrightarrow \quad \{\text{beta reduce}\}$$

$$\textbf{tg} \ \epsilon_0 \ (\textbf{tg} \ \epsilon_1 \ (h \, ((y + (0 + 1\epsilon_0)) + (0 + 1\epsilon_1)))) \tag{19s}$$

$$\Longrightarrow \quad \{\text{add dual numbers}\}$$

$$\textbf{tg} \ \epsilon_0 \ (\textbf{tg} \ \epsilon_1 \ (h \, ((y + 1\epsilon_0) + (0 + 1\epsilon_1)))) \tag{19t}$$

$$\Longrightarrow \quad \{\text{add dual numbers}\}$$

$$\textbf{tg} \ \epsilon_0 \ (\textbf{tg} \ \epsilon_1 \ (h \, ((y + 1\epsilon_0) + 1\epsilon_1))) \tag{19u}$$

$$\Longrightarrow \quad \{\text{same as (14r)}\}$$

$$\textbf{tg} \ \epsilon_0 \ (\textbf{tg} \ \epsilon_1 \ (h(y + 1\epsilon_0) + h'(y + 1\epsilon_0)\epsilon_1)) \tag{19v}$$

$$\Longrightarrow \quad \{\text{same as (14s)}\}$$

$$\textbf{tg} \ \epsilon_0 \ (\textbf{tg} \ \epsilon_1 \ ((h(y) + h'(y)\epsilon_0) + h'(y + 1\epsilon_0)\epsilon_1)) \tag{19w}$$

$$\Longrightarrow \qquad \{\text{same as (14t)}\}$$

$$\textbf{tg}\ \epsilon_1\ (\textbf{tg}\ \epsilon_1\ ((h(y) + h'(y)\epsilon_0) + (h'(y) + h''(y)\epsilon_0)\epsilon_1)) \qquad (19\text{x})$$

$$\Longrightarrow \qquad \{\text{same as (14u)}\}$$

$$\textbf{tg}\ \epsilon_0\ (h'(y) + h''(y)\epsilon_0) \qquad (19\text{y})$$

$$\Longrightarrow \qquad \{\text{same as (14v)}\}$$

$$h''(y) \qquad (19\text{z})$$

Here, the allocation of a fresh tag is delayed from equation (19b) and is performed twice, in equations (19g) and (19j), allowing equation (19v) to correct the mistake in equation (12l), just like equation (14r).

It should be appreciated that this disclosure only considers a space of types that includes scalar reals and functions but not aggregates (exclusive of dual numbers). Complications can arise when extending the space of types to include aggregates. The example below illustrates that the above mechanism works with functions that return Church-encoded aggregates.

$$(a, d)\ m \stackrel{\triangle}{=} m\ a\ d \qquad (20\text{a})$$

$$\textbf{fst}\ c \stackrel{\triangle}{=} c\ (\lambda a\ .\ (\lambda d\ .\ a)) \qquad (20\text{b})$$

$$\textbf{snd}\ c \stackrel{\triangle}{=} c\ (\lambda a\ .\ (\lambda d\ .\ d)) \qquad (20\text{c})$$

$$t\ u \stackrel{\triangle}{=} (e^{u \times u}, (\lambda f\ .\ (\lambda x\ .\ (f\ x + u)))) \qquad (20\text{d})$$

$$\mathscr{D}\ t\ 1 \Longrightarrow t'(1) \qquad (20\text{e})$$

$$p \stackrel{\triangle}{=} \mathscr{D}\ t\ 0 \qquad (20\text{f})$$

$$\textbf{fst}\ p \Longrightarrow 0 \qquad (20\text{g})$$

$$\vec{\mathscr{D}} \stackrel{\triangle}{=} \textbf{snd}\ p \qquad (20\text{h})$$

$$\vec{\mathscr{D}}\ (\vec{\mathscr{D}}\ \exp)\ 1 \Longrightarrow e \qquad (20\text{i})$$

With a function that returned native aggregates, one would need to emulate the behavior that occurs with Church-encoded aggregates on native aggregates by delaying derivative calculation, with the associated tag allocation and **tg** applied to the native

returned aggregate, until an accessor is applied to that aggregate. Consider $\mathscr{D}\ t\ 0$ where $t: \mathbb{R} \to (\mathbb{R} \times ((\mathbb{R} \to \mathbb{R}) \to \mathbb{R}))$ as above. One could not perform the derivative calculation when computing the value $p$ returned by $\mathscr{D}\ t\ 0$. One would have to delay until applying an accessor to $p$. If one accessed the first element of $p$, one would perform the derivative calculation, with the associated tag allocation, at the time of access. But if one accessed the second element of $p$, one would have to further delay the derivative calculation, with the associated tag allocation, until that second element was invoked. This could require different amounts of delay that might be incompatible with some static type systems.

Moreover, it will be appreciated that a type system or other static analysis mechanism that is unable to handle the unbounded polymorphism of equations (17a), (17b), (17c), ... or infer the "is [not] a function" side conditions of equations (18a) and (18b), achieving completeness might require run-time evaluation of the side conditions. This could involve calling $f$ twice, once to determine its return type and once to do the eta-expanded derivative calculation, and lead to exponential increase in asymptotic time complexity.

Finally, the solution may break sharing in curried functions, even with a type system or other static analysis mechanism that is able to eliminate the run-time evaluation of "is [not] a function" side conditions. Consider

$$g\ x \stackrel{\triangle}{=} \textbf{let}\ t \stackrel{\triangle}{=} f\ x\ \textbf{in}\ \lambda p\ .\ p\ t \qquad (21)$$

invoked in:

$$h\,x \stackrel{\triangle}{=} \mathbf{let}\ c \stackrel{\triangle}{=} g\,x\ \mathbf{in}\ (c\,(\lambda t\,.\,t)) + (c\,(\lambda t\,.\,(\lambda u\,.\,t \times u))\,\pi) \qquad (22)$$

The programmer would expect $h\,8$ to call $f$ once in the calculation of the temporary $t = f\,8$. And indeed this is what would occur in practice. Now consider $\mathscr{D}\ h\,8$. The strategy discussed above would (in the absence of memoization or similar heroic measures) end up calculating $f\,8$ twice, as the delayed tag allocation would end up splitting into two independent tag allocations with each independently redoing the calculation. This violates the constant-factor-overhead complexity guarantee of forward AD, imposing, in the worst case, exponential overhead.

Second Method of Improved Automatic Differentiation of Higher-Order Functions

A second method for resolving the bug described above is to wrap $\overline{g}$ with tag substitution to guard against tag collision. Particularly, as noted above, if one applies $\mathscr{D}$ to a higher-order function $f\,x$ that returns a function $g$ which takes an argument $y$, then $\overline{f}(x + 1\varepsilon)$ in equation (8d) will yield a function $\overline{g}$ which takes the argument $y$. Thus, an invocation of $\mathscr{D}\ f\,x$ yields a function $\overline{g}$ which takes the argument $y$ and which itself performs a derivative calculation with respect to function $f\,x$ when invoked. It will not be possible to extract the tangent of this with **tg** as implemented by equations (8a), (8b), and (8c). The definition of **tg** can be augmented to handle this and to also resolve the bug in equation (8e) by replacing equation (8e) with:

$$\mathbf{tg}\ \varepsilon_1\ \overline{g}\,y \stackrel{\triangle}{=} \mathbf{fresh}\ \varepsilon\ \mathbf{in}\ ([\varepsilon_1/\varepsilon] \circ (\mathbf{tg}\ \varepsilon_1) \circ \overline{g} \circ [\varepsilon/\varepsilon_1])\,y \qquad \overline{g}\ \text{is a function} \qquad (23)$$

Here $[\varepsilon_1/\varepsilon_2]\,x$ substitutes $\varepsilon_1$ for $\varepsilon_2$ in $x$. In a language with opaque closures, tag substitution must operate on functions by appropriate pre- and post-composition.

$$[\varepsilon_1/\varepsilon_2]\,a \stackrel{\triangle}{=} a \qquad\qquad\qquad\qquad a : \mathbb{R} \quad (24a)$$

$$[\varepsilon_1/\varepsilon_2]\,(a + b\varepsilon_2) \stackrel{\triangle}{=} a + b\varepsilon_1 \qquad\qquad\qquad\qquad (24b)$$

$$[\varepsilon_1/\varepsilon_2]\,(a + b\varepsilon) \stackrel{\triangle}{=} ([\varepsilon_1/\varepsilon_2]\,a) + ([\varepsilon_1/\varepsilon_2]\,b)\varepsilon \qquad\qquad \varepsilon \neq \varepsilon_2 \quad (24c)$$

$$[\varepsilon_1/\varepsilon_2]\,\overline{g}\,y \stackrel{\triangle}{=} \mathbf{fresh}\ \varepsilon\ \mathbf{in}\ ([\varepsilon_2/\varepsilon] \circ [\varepsilon_1/\varepsilon_2] \circ \overline{g} \circ [\varepsilon/\varepsilon_2])\,y \quad \overline{g}\ \text{is a function} \quad (24d)$$

The intent of equation (24d) is to substitute $\varepsilon_1$ for $\varepsilon_2$ in values closed-over in $\overline{g}$. An $\varepsilon_2$ in the output of $\overline{g}$ can result either from closed-over values and/or input values. We want to substitute for instances of $\varepsilon_2$ in the output that result from the former but not the latter. This is accomplished by substituting a fresh tag for instances of $\varepsilon_2$ in the input and substituting them back at the output to preserve the extensional behavior of $\overline{g}$. Equation (23) operates in a similar fashion. The intent of equation (23) is to extract the coefficient of instances of $\varepsilon_1$ in the output of $\overline{g}$ that result from closed-over values, not input values. This is accomplished by substituting a fresh tag for instances of $\varepsilon_1$ in the input and substituting them back at the output to preserve the extensional behavior of $\overline{g}$.

We can see that this also resolves the bug in equations (12a)-(12o) and accomplishes the desiderata in equations (14a)-(14l) without making two copies of . Particularly, $\widehat{\mathscr{D}}$ is computed according to the steps:

$$\hat{\mathscr{D}}$$

$$\implies \quad \{\text{by (11)}\}$$

$$\mathscr{D}\, s\, 0 \tag{25a}$$

$$\implies \quad \{\text{by (8d)}\}$$

$$\textbf{fresh } \varepsilon \textbf{ in } \textbf{tg } \varepsilon\, (s\, (0 + 1\varepsilon)) \tag{25b}$$

$$\implies \quad \{\text{allocate a fresh tag } \epsilon_0\}$$

$$\textbf{tg } \epsilon_0\, (s\, (0 + 1\epsilon_0)) \tag{25c}$$

$$\implies \quad \{\text{by (9)}\}$$

$$\textbf{tg } \epsilon_0\, (\lambda f\, .\, \lambda x\, .\, (f\, (x + 1\epsilon_0))) \tag{25d}$$

$$\implies \quad \{\text{by (23)}\}$$

$$\lambda y\, .\, (\textbf{fresh } \varepsilon \textbf{ in } ([\epsilon_0/\varepsilon] \circ (\textbf{tg } \epsilon_0) \circ (\lambda f\, .\, \lambda x\, .\, (f\, (x + 1\epsilon_0))) \circ [\varepsilon/\epsilon_0])\, y) \tag{25e}$$

Next, $\widehat{\mathscr{D}}\, (\widehat{\mathscr{D}}\, h)\, y$ is computed according to the steps:

$$\hat{\mathscr{D}}\,(\hat{\mathscr{D}}\,h)\,y$$

$\Longrightarrow$ {substitute (25e) for $\hat{\mathscr{D}}$}

$$\lambda y\,.\,(\textbf{fresh } \varepsilon \textbf{ in } ([\epsilon_0/\varepsilon] \circ (\textbf{tg } \epsilon_0) \circ (\lambda f\,.\,\lambda x\,.\,(f\,(x+1\epsilon_0))) \circ [\varepsilon/\epsilon_0])\,y) \qquad (25\text{f})$$
$$(\lambda y\,.\,(\textbf{fresh } \varepsilon \textbf{ in } ([\epsilon_0/\varepsilon] \circ (\textbf{tg } \epsilon_0) \circ (\lambda f\,.\,\lambda x\,.\,(f\,(x+1\epsilon_0))) \circ [\varepsilon/\epsilon_0])\,y)\,h)$$
$$y$$

$\Longrightarrow$ {beta reduce}

$$\lambda y\,.\,(\textbf{fresh } \varepsilon \textbf{ in } ([\epsilon_0/\varepsilon] \circ (\textbf{tg } \epsilon_0) \circ (\lambda f\,.\,\lambda x\,.\,(f\,(x+1\epsilon_0))) \circ [\varepsilon/\epsilon_0])\,y) \qquad (25\text{g})$$
$$(\textbf{fresh } \varepsilon \textbf{ in } ([\epsilon_0/\varepsilon] \circ (\textbf{tg } \epsilon_0) \circ (\lambda f\,.\,\lambda x\,.\,(f\,(x+1\epsilon_0))) \circ [\varepsilon/\epsilon_0])\,h)$$
$$y$$

$\Longrightarrow$ {beta reduce}

$$(\textbf{fresh } \varepsilon \textbf{ in } ([\epsilon_0/\varepsilon] \circ (\textbf{tg } \epsilon_0) \circ (\lambda f\,.\,\lambda x\,.\,(f\,(x+1\epsilon_0))) \circ [\varepsilon/\epsilon_0]) \qquad (25\text{h})$$
$$(\textbf{fresh } \varepsilon \textbf{ in } ([\epsilon_0/\varepsilon] \circ (\textbf{tg } \epsilon_0) \circ (\lambda f\,.\,\lambda x\,.\,(f\,(x+1\epsilon_0))) \circ [\varepsilon/\epsilon_0])\,h))$$
$$y$$

$\Longrightarrow$ {allocate a fresh tag $\epsilon_1$}

$$((([\epsilon_0/\epsilon_1] \circ (\textbf{tg } \epsilon_0) \circ (\lambda f\,.\,\lambda x\,.\,(f\,(x+1\epsilon_0))) \circ [\epsilon_1/\epsilon_0]) \qquad (25\text{i})$$
$$(\textbf{fresh } \varepsilon \textbf{ in } ([\epsilon_0/\varepsilon] \circ (\textbf{tg } \epsilon_0) \circ (\lambda f\,.\,\lambda x\,.\,(f\,(x+1\epsilon_0))) \circ [\varepsilon/\epsilon_0])\,h))$$
$$y$$

$\Longrightarrow$ {allocate a fresh tag $\epsilon_2$}

$$((([\epsilon_0/\epsilon_1] \circ (\textbf{tg } \epsilon_0) \circ (\lambda f\,.\,\lambda x\,.\,(f\,(x+1\epsilon_0))) \circ [\epsilon_1/\epsilon_0]) \qquad (25\text{j})$$
$$((([\epsilon_0/\epsilon_2] \circ (\textbf{tg } \epsilon_0) \circ (\lambda f\,.\,\lambda x\,.\,(f\,(x+1\epsilon_0))) \circ [\epsilon_2/\epsilon_0])\,h))$$
$$y$$

$\Longrightarrow$ {substitute $\epsilon_2$ for $\epsilon_0$, which leaves $h$ unchanged since it can't close over the freshly allocated tags}

$$((([\epsilon_0/\epsilon_1] \circ (\textbf{tg } \epsilon_0) \circ (\lambda f\,.\,\lambda x\,.\,(f\,(x+1\epsilon_0))) \circ [\epsilon_1/\epsilon_0]) \qquad (25\text{k})$$
$$((([\epsilon_0/\epsilon_2] \circ (\textbf{tg } \epsilon_0) \circ (\lambda f\,.\,\lambda x\,.\,(f\,(x+1\epsilon_0)))))\,h))$$
$$y$$

$\Longrightarrow$ {beta reduce and postcompose}

$$((([\epsilon_0/\epsilon_1] \circ (\textbf{tg } \epsilon_0) \circ (\lambda f\,.\,\lambda x\,.\,(f\,(x+1\epsilon_0))) \circ [\epsilon_1/\epsilon_0]) \qquad (25\text{l})$$
$$(\lambda x\,.\,([\epsilon_0/\epsilon_2]\,(\textbf{tg } \epsilon_0\,(h\,(x+1\epsilon_0))))))))$$
$$y$$

$$\implies \qquad \{\text{substitute } \epsilon_1 \text{ for } \epsilon_0\}$$

$$((([\epsilon_0/\epsilon_1] \circ (\mathbf{tg}\ \epsilon_0) \circ (\lambda f . \lambda x . (f\ (x + 1\epsilon_0))))) \qquad (25m)$$
$$(\lambda x . ([\epsilon_1/\epsilon_2]\ (\mathbf{tg}\ \epsilon_1\ (h\ (x + 1\epsilon_1))))))))$$
$$y$$

$$\implies \qquad \{\text{beta reduce and postcompose}\}$$

$$(\lambda x . ([\epsilon_0/\epsilon_1]\ (\mathbf{tg}\ \epsilon_0\ ((\lambda x . ([\epsilon_1/\epsilon_2]\ (\mathbf{tg}\ \epsilon_1\ (h\ (x + 1\epsilon_1)))))\ (x + 1\epsilon_0))))))\ y \qquad (25n)$$
$$\implies \qquad \{\text{beta reduce}\}$$

$$[\epsilon_0/\epsilon_1]\ (\mathbf{tg}\ \epsilon_0\ ((\lambda x . ([\epsilon_1/\epsilon_2]\ (\mathbf{tg}\ \epsilon_1\ (h\ (x + 1\epsilon_1)))))\ (y + 1\epsilon_0))) \qquad (25o)$$

$$\implies \qquad \{\text{beta reduce}\}$$

$$[\epsilon_0/\epsilon_1]\ (\mathbf{tg}\ \epsilon_0\ ([\epsilon_1/\epsilon_2]\ (\mathbf{tg}\ \epsilon_1\ (h\ ((y + 1\epsilon_0) + 1\epsilon_1))))) \qquad (25p)$$
$$\implies \qquad \{\text{apply } h \text{ to a dual number}\}$$

$$[\epsilon_0/\epsilon_1]\ (\mathbf{tg}\ \epsilon_0\ ([\epsilon_1/\epsilon_2]\ (\mathbf{tg}\ \epsilon_1\ (h(y + 1\epsilon_0) + h'(y + 1\epsilon_0)\epsilon_1)))) \qquad (25q)$$

$$\implies \qquad \{\text{apply } h \text{ to a dual number}\}$$

$$[\epsilon_0/\epsilon_1]\ (\mathbf{tg}\ \epsilon_0\ ([\epsilon_1/\epsilon_2]\ (\mathbf{tg}\ \epsilon_1\ ((h(y) + h'(y)\epsilon_0) + h'(y + 1\epsilon_0)\epsilon_1)))) \qquad (25r)$$
$$\implies \qquad \{\text{apply } h \text{ to a dual number}\}$$

$$[\epsilon_0/\epsilon_1]\ (\mathbf{tg}\ \epsilon_0\ ([\epsilon_1/\epsilon_2]\ (\mathbf{tg}\ \epsilon_1\ ((h(y) + h'(y)\epsilon_0) + (h'(y) + h''(y)\epsilon_0)\epsilon_1)))) \qquad (25s)$$

$$\implies \qquad \{\text{by (8b)}\}$$

$$[\epsilon_0/\epsilon_1]\ (\mathbf{tg}\ \epsilon_0\ ([\epsilon_1/\epsilon_2]\ (h'(y) + h''(y)\epsilon_0))) \qquad (25t)$$
$$\implies \qquad \{\text{substitute } \epsilon_1 \text{ for } \epsilon_2\}$$

$$[\epsilon_0/\epsilon_1]\ (\mathbf{tg}\ \epsilon_0\ (h'(y) + h''(y)\epsilon_0)) \qquad (25u)$$

$$\implies \qquad \{\text{by (8b)}\}$$

$$[\epsilon_0/\epsilon_1]\ h''(y) \qquad (25v)$$
$$\implies \qquad \{\text{substitute } \epsilon_0 \text{ for } \epsilon_1\}$$

$$h''(y) \qquad (25w)$$

Equations (25k) and (25m) are abbreviated as they really use equation (24d). Here, the tag substitution in equation (25m) allows equation (25q) to correct the mistake in equation (12l), just like equation (14r).

It should be appreciated that this solution can present problems when implemented as user code in a pure language. In the presence of aggregates, unless care is taken, the computational burden of tag substitution can violate the complexity guarantees of forward AD. The call to **tg** in Step 3 might take longer than unit time as tag substitution must potentially traverse an aggregate of arbitrary size. When that aggregate shares substructure, a careless implementation might traverse such shared substructure multiple times, leading to potential exponential growth in time complexity. Moreover, a careless implementation might copy shared substructure multiple times, leading to potential exponential growth in space complexity.

In one embodiment, laziness, memoization, and hash-consing are utilized to help solve this, but it can be tricky to employ such in a fashion that preserves the requisite time and space complexity guarantees of forward AD, particularly in a pure or multithreaded context. Moreover, it will be appreciated that laziness, memoization, and hash-consing might not completely eliminate the problem. First, some languages like PYTHON and SCHEME lack the requisite pervasive default laziness. Failure to explicitly code the correct portions of user code as lazy in an eager language can break the complexity guarantees in subtle ways. But there are subtle issues even in languages like HASKELL with the requisite pervasive default laziness, and even when laziness is correctly introduced manually in eager languages. One is that memoization and hash-consing implicitly involve a notion of equality. But it is not clear what notion of equality to use, especially with "gensym" and potential alpha equivalence. One might need eq?, pointer or intentional equivalence, rather than equal?, structural or extensional equivalence, and all of the impurity that this introduces. Further, memoization and hash-consing might themselves be a source of a new kind of perturbation confusion if tags can persist. One would then need to substitute the memoized tags or the hash-cons cache. Beyond this, memoization and hash-consing could break space complexity guarantees unless the cache were flushed. It is not clear when/where to flush the cache, and even whether there is a consistent place to do so. There might be inconsistent competing concerns. Finally, many systems don't provide the requisite hooks to do all of this. One would need weak pointers and finalization.

The above difficulties only arise when implementing tag substitution as user code in a pure language. The opacity of closures necessitates implementing tag substitution on functions via pre- and post-composition (24d). The complexity guarantees of forward AD could be maintained if the substitution mechanism $[\varepsilon_1/\varepsilon_2] \, x$ were implemented so that it (a) did not traverse shared substructure multiple times, (b) copied shared sub structure during renaming in a fashion that preserved structure sharing, and (c) could apply to closures, by accessing, copying, renaming, and reclosing around the environments inside closures, without resorting to pre- and post-composition. This could be accomplished either by including the $[\varepsilon_1/\varepsilon_2] \, x$ mechanism as a primitive in the implementation, or by providing other lower-level primitives out of which it could be fashioned. One such mechanism is map - closure, the ability to reflectively access and modify closure environments.

Extension of the Methods to Higher-Order Functions Whose Ranges and Domains are Functions

The definition of equation (3) only extends $\mathbb{D}$, and the mechanisms of the first method and second method described above only extend $\mathscr{D}$ to higher-order functions $\mathbb{R} \to \alpha$ whose ranges are functions. Differential geometry provides the framework for extending $\mathbb{D}$ to functions $\alpha_1 \to \alpha_2$ whose domains too are functions.

Differential geometry concerns itself with differentiable mappings between manifolds, where intuitively a manifold is a surface along which points can move smoothly, like the surface of a sphere or the space of $n \times n$ rotation matrices. Given a point $x$, called a *primal* (value), on a manifold $\alpha$, we can consider infinitesimal perturbations of $x$. The space of such perturbations is a vector space called a *tangent space*, denoted by $T_x\alpha$. This is a dependent type, dependent on the primal $x$. A particular perturbation, an element $x'$ of the tangent space, is called a *tangent* (value). A pair $(x, x')$ of a primal and tangent value is called a *bundle* (value), which are members of a bundle space $T\alpha = \Sigma_{x:\alpha}\{x\} \times T_x\alpha$. Bundles generalize the notion of dual numbers. So, if $x$ has type $\alpha$, for some $\alpha$, the tangent $x'$ has type $T_x\alpha$, and they can be bundled together as $(x + x'\varepsilon)$ which has type $T\alpha$.

The machinery of differential geometry defines $T_x\alpha$ for various manifolds and spaces $\alpha$. For function spaces $\alpha \to \beta$, where $f$ is of type $\alpha \to \beta$, $T_f(\alpha \to \beta) = (a:\alpha) \to T_{f(a)}\beta$ and $T(\alpha \to \beta) = \alpha \to T\beta$. The function **bundle** $(x:\alpha)(x':T_x\alpha) \mapsto (x:x'):T\alpha$ constructs a bundle from a primal and a tangent, and the function **tangent** $(x, x'):T\alpha \mapsto x':T_x\alpha$ extracts a tangent from a bundle. Differential geometry provides a *push forward* operator that generalizes the notion of a univariate derivative from functions $f$ of type $\mathbb{R} \to \mathbb{R}$ to functions $f$ of type $\alpha \to \beta$.

$$\mathbf{pf} : (\alpha \to \beta) \to (T\alpha \to T\beta) \qquad (26)$$

This augments the original mapping $(a:\alpha) \to \beta$ to also *linearly* map a tangent $T_a\alpha$ of the input $a$ to a tangent $T_{f(a)}\beta$ of the output $f(a)$.

Here we sketch how to materialize differential geometry as program constructs to generalize D to functions $\alpha_1 \to \alpha_2$ whose domains (and ranges) are functions. We first note that:

$$\mathbb{D} f \, x = \mathbf{tangent} \, (\mathbf{pf} \, f \, (\mathbf{bundle} \, x \, 1)) \qquad (27)$$

This only applies when $x:\mathbb{R}$ because of the constant 1. We can generalize this to a directional derivative:

$$\overrightarrow{\mathbb{J}} f \, x \, x' = \mathbf{tangent} \, (\mathbf{pf} \, f \, (\mathbf{bundle} \, x \, x')) \qquad (28)$$

This further generalizes to $x$ of any type. With this, $\mathbb{D}$ becomes a special case of $\overrightarrow{\mathbb{J}}$:

$$\mathbb{D}\,f\,x = \vec{\mathbb{J}}\,f\,x\,1 \qquad\qquad (29)$$

To materialize $\vec{\mathbb{J}}$ in equation (28), we need to materialize **tangent, pf,** and **bundle.** The definition of **tg** in equations (8a)-(8c) and equation (8e) materializes **tangent** with the first method that utilizes eta expansion. Likewise, definition of **tg** in equations (8a)-(8c) and equation (23) materializes **tangent** with the second method that utilizes tag substitution. The nonstandard interpretation of the arithmetic basis functions sketched in equations (5a) and (5b) materializes **pf** by lifting a computation on real numbers to a computation on dual numbers. All that remains is to materialize **bundle.** So far, we have been simply writing this as Step 2, a map from $a$ to $a + 1\varepsilon$ or a map from $x$ to $x + 1\varepsilon$ in equation (8d). This only works for numbers, not functions.

With the framework of the first method that utilizes eta expansion, we can extend this to functions:

$$\mathbf{bun}\ \varepsilon\,x\,x' \stackrel{\triangle}{=} x + x'\varepsilon \qquad\qquad x \text{ and } x' \text{ are not functions} \qquad (30a)$$

$$\mathbf{bun}\ \varepsilon\,f\,f'\,y \stackrel{\triangle}{=} \mathbf{bun}\ \varepsilon\,(f\,y)\,(f'\,y) \qquad\qquad f \text{ and } f' \text{ are functions} \qquad (30b)$$

The post-composition in equation (30b) is analogous to that in equation (8e).

With the framework of the second method that utilizes tag substitution, instead of to equation (30b), we use the alternative:

$$\mathbf{bun}\ \varepsilon_1\,f\,f'\,y \stackrel{\triangle}{=} \mathbf{fresh}\ \varepsilon \qquad\qquad f \text{ and } f' \text{ are functions} \qquad (31)$$
$$\mathbf{in}\ [\varepsilon_1/\varepsilon]\,(\mathbf{bun}\ \varepsilon_1\,(f\,([\varepsilon/\varepsilon_1]\,y))\,(f'\,([\varepsilon/\varepsilon_1]\,y)))$$

The additional tag substitution in equation (31) is analogous to that in equation (23).

With this, we can now materialize $\vec{\mathbb{J}}$ in the framework of the first method that utilizes eta expansion:

$$\vec{\mathscr{J}}\,f\,x\,x' \stackrel{\triangle}{=} \lambda y\,.\,(\vec{\mathscr{J}}\,(\lambda x\,.\,(f\,x\,y))\,x\,x') \qquad\qquad (f\,x) \text{ is a function} \qquad (32a)$$

$$\vec{\mathscr{J}}\,f\,x\,x' \stackrel{\triangle}{=} \mathbf{fresh}\ \varepsilon\ \mathbf{in}\ \mathbf{tg}\ \varepsilon\,(f\,(\mathbf{bun}\ \varepsilon\,x\,x')) \qquad\qquad (f\,x) \text{ is not a function} \qquad (32b)$$

The equations (32a) and (32b) are analogous to equations (18a) and (18b).

Likewise, we can now materialize $\vec{\mathbb{J}}$ in the framework of the second that utilizes tag substitution:

$$\vec{\mathscr{J}}\,f\,x\,x' \stackrel{\triangle}{=} \mathbf{fresh}\ \varepsilon\ \mathbf{in}\ \mathbf{tg}\ \varepsilon\,(f\,(\mathbf{bun}\ \varepsilon\,x\,x')) \qquad\qquad (33)$$

The equation (33) is analogous to equation (8d).

With this, $\mathscr{D}$ becomes a special case of $\vec{\mathscr{J}}$:

$$\mathscr{D}\,f\,x \stackrel{\triangle}{=} \vec{\mathscr{J}}\,f\,x\,1 \qquad\qquad (34)$$

There is a crucial difference, however, between **bundle** and **tangent** and the corresponding materializations **bun** and **tg.** The former do not take $\varepsilon$ as an argument. This allows them to be used as distinct notational entities. In contrast, **bun** and **tg** must take the *same* $\varepsilon$ as an argument, this tag *must* be fresh, and it should not be used anywhere else. Thus, it should not escape, except in ways that are protected by tag substitution. This motivates creation of the $\vec{\mathscr{J}}$ construct. There is no corresponding standard $\vec{\mathbb{J}}$ construct in differential geometry; we created it just to describe the intended meaning of $\vec{\mathscr{J}}$.

## Automatic Differentiation System

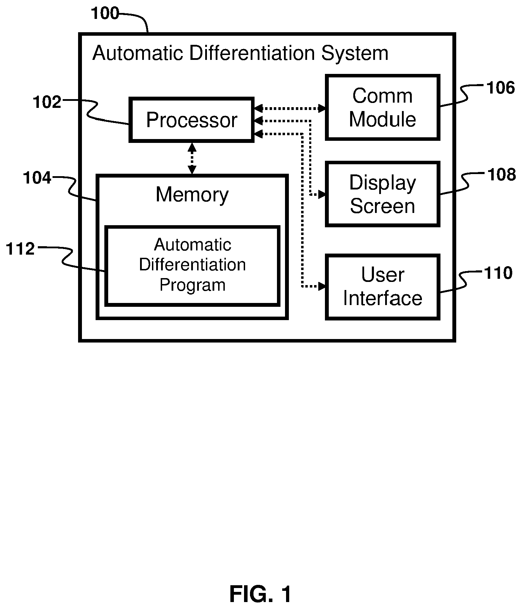

FIG. 1 shows a block diagram of an exemplary embodiment of an automatic differentiation system 100. The automatic differentiation system 100 utilizes the methods described above to provide automatic differentiation (AD) that accurately supports functions whose domains and/or ranges are functions. These methods enable AD that is completely general and which can be applied in an unrestricted fashion to correctly compute the derivative of all programs that compute differentiable mathematical functions. This includes application to functions whose domain and/or ranges include the entire space of data types supported by programming languages, including not only aggregates but also functions. Moreover, as described in detail above, these methods remedy an insidious bug that would otherwise lead to incorrect results.

In the illustrated exemplary embodiment, the automatic differentiation system 100 comprises at least one processor 102, at least one memory 104, a communication module 106, a display screen 108, and a user interface 110. However, it will be appreciated that the components of the automatic differentiation system 100 shown and described are merely exemplary and that the automatic differentiation system 100 may comprise any alternative configuration. Particularly, the automatic differentiation system 100 may comprise any computing device such as a desktop computer, a laptop, a smart phone, a tablet, or other personal electronic device. Thus, the automatic differentiation system 100 may comprise any hardware components conventionally included in such computing devices.

The memory 104 is configured to store data and program instructions that, when executed by the at least one processor 102, enable the automatic differentiation system 100 to perform various operations described herein. The memory 104 may be of any type of device capable of storing information accessible by the at least one processor 102, such as a memory card, ROM, RAM, hard drives, discs, flash memory, or any of various other computer-readable medium serving as data storage devices, as will be recognized by those of ordinary skill in the art. Additionally, it will be recognized by those of ordinary skill in the art that a "processor" includes any hardware system, hardware mechanism or hardware component that processes data, signals or other information. Thus, the at least one processor 102 may include a central processing unit, graphics processing units, multiple processing units, dedicated circuitry for achieving functionality, programmable logic, or other processing systems. Additionally, it will be appreciated that, although the automatic differentiation system 100 is illustrated as single device, the automatic differentiation system 100 may comprise several distinct processing systems 40 that work in concert to achieve the functionality described herein.

The communication module 106 may comprise one or more transceivers, modems, processors, memories, oscillators, antennas, or other hardware conventionally included in a communications module to enable communications with various other devices, such as the drone 30. In at least some embodiments, the communication module 106 includes a Wi-Fi module configured to enable communication with a Wi-Fi network and/or Wi-Fi router (not shown). In further embodiments, the communications modules 46 may further include a Bluetooth® module, an Ethernet adapter and communications devices configured to communicate with wireless telephony networks.

The display screen 108 may comprise any of various known types of displays, such as LCD or OLED screens. In some embodiments, the display screen 108 may comprise a touch screen configured to receive touch inputs from a user. The user interface 110 may suitably include a variety of devices configured to enable local operation of the automatic differentiation system 100 by a user, such as a mouse, trackpad, or other pointing device, a keyboard or other keypad, speakers, and a microphone, as will be recognized by those of ordinary skill in the art. Alternatively, in some embodiments, a user may operate the automatic differentiation system 100 remotely from another computing device which is in communication therewith via the communication module 106 and has an analogous user interface.

The program instructions stored on the memory 104 include an automatic differentiation program 112. As discussed in further detail below, the processor 102 is configured to execute the automatic differentiation program 112 to (i) receive first program code that defines a higher-order function whose range and/or domain are functions and (ii) determine or evaluate a derivative of the function. To perform this task, the automatic differentiation program 112 implements a variety of methods, which are described in greater detail below.

## Method of Operating the Automatic Differentiation System

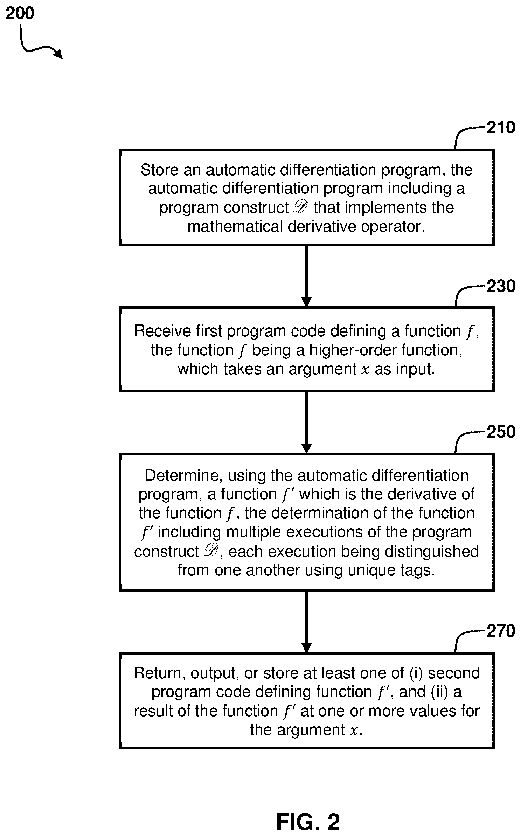

FIG. 2 shows a flow diagram for a method 200 for operating the automatic differentiation system. In the description of these method, statements that some task, calculation, or function is performed refers to a processor (e.g., the processor 102 of the automatic differentiation system 100) executing programmed instructions stored in non-transitory computer readable storage media (e.g., the memory 104 of the automatic differentiation system 100) operatively connected to the processor to manipulate data or to operate one or more components of the automatic differentiation system 100 to perform the task or function. Additionally, the steps of the methods may be performed in any feasible chronological order, regardless of the order shown in the figures or the order in which the steps are described.

The method 200 begins with a step of storing an automatic differentiation program, the automatic differentiation program including a program construct $\mathscr{D}$ that implements the mathematical derivative operator (block 210). The memory 104 stores the automatic differentiation program 112, which includes the derivative operator program construct $\mathscr{D}$ that implements mathematical derivative operator $\mathbb{D}$. As used herein "program construct" refers to fragment of program code that can be invoked by a syntax that is identifiable by a compiler or interpreter. The automatic differentiation program 112 may, of course, include other program constructs that implement other operations.

The method 200 continues with a step of receiving first program code defining a function *f,* the function *f* being a higher-order function which takes an argument *x* as input (block 230). The processor 102 is configured to receive first program code that defines a first mathematical function *f.* As used herein, the term "function" refers to a concrete function that is implemented by computer program code. Accordingly, the first mathematical function *f* and the first program code that implements or defines the first mathematical function *f* can be considered essentially one and the same.

The first program code is configured to implement the first mathematical function *f* to take an argument *x* as input and output a result based on the argument *x.* As used herein an "argument" or "independent variable" of a function refers to a value that is provided as an input to a function in order to obtain the function's result. In some cases, an argument may be a function which takes another argument as input to obtain the result. In at least one embodiment, the first program code is written in a functional programing language.

Additionally, the first mathematical function *f* defined by the first program code is a higher-order function. As used herein a "higher-order" function refers a function that takes one or more functions as arguments and/or returns a function as its result. In other words, a higher-order has a range that is function and/or a domain that is a function. In contrast, as used herein a "first-order" function refers to a function that does not take a function as an argument and does not return a function as its result. In other words, a first-order function is a function having a non-function range and a non-function domain. Accordingly, the first mathematical function *f* defined by the first program code is configured to take the argument *x* as input and output a function g which take an argument *y.*

In at least one embodiment, the memory 104 further stores some program *P* which has some arbitrary purpose and which requires the determination of a derivative of a mathematical function that is defined by a fragment of program code. The program *P* may utilize the automatic differentiation program 112 to determine the derivative of the mathematical function. The program *P* may invoke the derivative operator program construct $\mathscr{D}$, providing the mathematical function that is defined by a fragment of program code as an argument. In the method 200, the first mathematical function *f* and the first program code is the fragment of program code that is provided as an argument to this top-level invocation the derivative operator program construct $\mathscr{D}$.

In at least some embodiments, in addition to the first program code that defines a first mathematical function *f,* the processor 102 further receives a value for the argument *x.* The program *P* may invoke the derivative operator program construct $\mathscr{D}$, providing (i) the first program code that defines a first mathematical function *f* and (ii) a value for the argument *x,* as arguments of the top-level invocation of the derivative operator program construct $\mathscr{D}$.

With continued reference to FIG. 2, the method 200 continues with a step of determining, using the automatic differentiation program, a function *f'* which is the derivative of the function *f,* the determination of the function *f'* including multiple executions of the program construct $\mathscr{D}$, each execution being distinguished from one another using unique tags (block 250). The processor 102 is configured to execute the automatic differentiation program 112 to determine a second mathematical function *f',* which is the derivative of the first mathematical function *f* (i.e., $f'\ x = \mathbb{D}\ f\ x$). The processor 102 determines the second mathematical function *f'* by applying the derivative operator program construct $\mathscr{D}$ of the automatic differentiation program 112 to the first mathematical function *f* defined by the received first program code.

As used herein, "determining" the second mathematical function *f'* includes automatic differentiation using operator overloading techniques, source transformation techniques, or any other equivalent technique. The processor 102 utilizes source transformation techniques to generate second program code that defines the second mathematical function *f',* and which can be executed to evaluate the second mathematical function *f'* at particular values for the argument *x.* Additionally, in some embodiments, the processor 102 utilizes operator overloading techniques to evaluate the second mathematical function *f'* at particular values for the argument *x* using the first program code that defines the first mathematical function *f* in conjunction with the derivative operator program construct $\mathscr{D}$.

In the case that the first mathematical function *f* is a higher-order function, the processor 102 must execute the derivative operator program construct $\mathscr{D}$ multiple times to determine the second mathematical function *f'.* As used herein, an "execution" the derivative operator program construct $\mathscr{D}$ refers to any distinct derivate calculation including a top-level invocation of the derivative operator program construct $\mathscr{D}$, as well as any nested calculations using the derivative operator program construct $\mathscr{D}$.

The derivative operator program construct $\mathscr{D}$ may implement any type of automatic differentiation. In some embodiments, the derivative operator program construct $\mathscr{D}$ implements forward mode AD. In some embodiments, the derivative operator program construct $\mathscr{D}$ implements reverse mode AD, which may utilize checkpointing. In some embodiments, the derivative operator program construct $\mathscr{D}$ implements a hybrid mode AD.

The processor 102 utilizes unique tags to distinguish between each particular execution of the derivative operator program construct $\mathscr{D}$ or, in other words, each distinct derivative calculation. This can be accomplished by either of the first and second methods described above - that is, by eta expansion or tag substitution.

In some embodiments, the processor 102 determines the second mathematical function $f'$ such that certain operations are performed at run-time and certain other operations are performed at compile-time. In this way, if feasible, any of the operations or steps discussed herein can be performed at run-time or at compile-time. Moreover, the processor 102 may determine whether a particular operation should be performed at run-time or at compile-time in a dynamic and intelligent manner.

In the determination of the second mathematical function $f'$, the processor 102 implements three steps (which correspond essentially to the steps 1-3, described above) for each respective execution of the derivative operator program construct $\mathscr{D}$. First, the processor 102 forms a dual number $x + 1\varepsilon_1$ with the argument $x$ as primal, with one as tangent, and with an infinitesimal number $\varepsilon_1$ having a unique tag (i.e., the subscript of the infinitesimal number $\varepsilon_1$) that uniquely associates it with the respective execution of the derivative operator program construct. As used herein, the term "tag" refers to any identifier, numeral, dependent data type, or other distinguishing feature that uniquely associates a particular infinitesimal number with a particular execution of the derivative operator program construct $\mathscr{D}$.

Next, the processor 102 determines a result $f(x + 1\varepsilon_1)$ by applying the first mathematical function $f$ with the respective dual number $x + 1\varepsilon_1$ as input. Finally, the processor 102 extracts a tangent from the result $f(x + 1\varepsilon_1)$ with respect to the infinitesimal number $\varepsilon_1$ associated with the respective execution of the derivative operator program construct, i.e. **tg** $\varepsilon_1 f(x + 1\varepsilon_1)$. These steps are performed for each particular execution of the derivative operator program construct $\mathscr{D}$.

As used herein a "dual number" refers to a number defined by three components: a primal, a tangent, and infinitesimal number $\varepsilon$, where $\varepsilon$ is an abstract number having the properties $\varepsilon^2 = 0$ and $\varepsilon \neq 0$. The abstract number $\varepsilon$ may be referred to herein as an "infinitesimal number" or a "nilpotent number." In rectangular or Cartesian form, a dual number takes the form of $a + b\varepsilon$. However, it will be appreciated that mathematically equivalent forms may also be utilized, such as a polar coordinate form, a data triple, or data tuple having a dependent data type. The coefficient $b$ of the infinitesimal number $\varepsilon$ is referred to herein as the "tangent" or "perturbation" of the dual number. Similarly, the value $a$ is referred to herein as the "primal" of the dual number. As used herein, "forming" a dual number with a primal $a$, a tangent $b$, and infinitesimal number $\varepsilon$ refers to forming the dual number as $a + b\varepsilon$ or in any mathematically or computationally equivalent form.

It will be appreciated that a number may include multiple infinitesimal numbers having multiple different tags (e.g., $\varepsilon_1, \varepsilon_2, ..., \varepsilon_n$) and can thus be considered a dual number with respect to each of the differently tagged infinitesimal numbers. For example, a number that includes both $\varepsilon_1$ and $\varepsilon_2$ may be manipulated into the form $a + b\varepsilon_1$, as well as into the form $c + d\varepsilon_2$. In this example, the value $a$ is the primal with respect to $\varepsilon_1$ and the value $b$ is the tangent with respect to $\varepsilon_1$. Likewise, the value $c$ is the primal with respect to $\varepsilon_2$ and the value $d$ is the tangent with respect to $\varepsilon_2$. Accordingly, as used herein a tangent "with respect to" a particular infinitesimal number $\varepsilon$ (notated as **tg** $\varepsilon$, above) refers to the value $b$ when the dual number is manipulated into the form $a + b\varepsilon$. Likewise, as used herein a primal "with respect to" a particular infinitesimal number $\varepsilon$ refers to the value $a$ when the dual number is manipulated into the form $a + b\varepsilon$. Thus, the primal $a$ and tangent $b$ with respect to a particular infinitesimal number (e.g., $\varepsilon_1$) may include another differently tagged infinitesimal number (e.g., $\varepsilon_2$), but will not include the particular infinitesimal number (e.g., $\varepsilon_1$) with respect to which the primal and tangent where extracted.

In embodiments utilizing eta expansion (first method), the processor 102 eta-expands the first mathematical function until all of the multiple executions of the derivative operator program construct $\mathscr{D}$ will result in non-function-containing results, in accordance with equations (18a) and (18b). This eta expansion is performed prior to the forming of the dual number $x + 1\varepsilon_1$, the determining of the result $f(x + 1\varepsilon_1)$, and the extracting of the tangent **tg** $\varepsilon_1 f(x + 1\varepsilon_1)$, for each of the multiple executions of the derivative operator program construct $\mathscr{D}$. The processor 102 determines the second mathematical function $f'$ as a result of the multiple executions of the derivative operator program construct $\mathscr{D}$ in the eta expansion of the first mathematical function $f$ according to equation. In some embodiments, prior to eta expansion, the processor 102 checks whether collision or confusion between distinct infinitesimal numbers is possible, and the eta expansion is terminated or omitted if collision or confusion is impossible.

In embodiments utilizing tag substitution (second method), the processor 102 determines the second mathematical function *f'* as being equal to the tangent $\mathbf{tg}\,\varepsilon_1\,f(x + 1\varepsilon_1)$ in the outermost calculation using the derivative operator program construct $\mathscr{D}$, in accordance with equation (8d), i.e. $$\mathscr{D}\,f\,x \triangleq \mathbf{fresh}\ \varepsilon\ \mathbf{in}\ \mathbf{tg}\ \varepsilon\ \ f(x + 1\varepsilon)$$. It will be appreciated that, in embodiments utilizing tag substitution, calculations using the derivative operator program construct $\mathscr{D}$ are nested and the outermost calculation refers to the final completed calculation using the using the derivative operator program construct *9*.

Regardless of whether eta expansion (first method) or tag substitution (second method) is utilized, for each respective execution of the derivative operator program construct $\mathscr{D}$, the processor 102 extracts the tangent $\mathbf{tg}\,\varepsilon_1\,f(x + 1\varepsilon_1)$ from the result $f(x + 1\varepsilon_1)$ according to equations (8a), (8b), and (8c). In response to the result $f(x + 1\varepsilon_1)$ defining a real number, the processor 102 determines the tangent $\mathbf{tg}\,\varepsilon_1\,f(x + 1\varepsilon_1)$ as zero in accordance with equation (8a), i.e. $$\mathbf{tg}\,\varepsilon_1\,a\ \triangleq 0$$. Additionally, in response to the result $f(x + 1\varepsilon_1)$ defining a dual number $a + b\varepsilon_1$ having only the infinitesimal number $\varepsilon_1$ associated with the respective execution of the derivative operator program construct, the processor 102 determines the tangent $\mathbf{tg}\,\varepsilon_1\,f(x + 1\varepsilon_1)$ as a tangent *b* of the dual number $a + b\varepsilon_1$ with respect to the infinitesimal number $\varepsilon_1$ associated with the respective execution of the derivative operator program construct, in accordance with equation (8b), i.e. $$\mathbf{tg}\,\varepsilon_1\,(a + b\varepsilon_1)\ \triangleq b$$. Finally, in response to the result $f(x + 1\varepsilon_1)$ defining a dual number $c + d\varepsilon_2$ having an infinitesimal number $\varepsilon_2$ associated with a different execution of the derivative operator program construct, the processor 102 determines the first tangent $\mathbf{tg}\,\varepsilon_1\,f(x + 1\varepsilon_1)$ according to equation (8c). The processor 102 extracts a tangent $\mathbf{tg}\,\varepsilon_1\,c$ with respect to the infinitesimal number $\varepsilon_1$ associated with the respective execution of the derivative operator program construct from a primal *c* of the dual number $c + d\varepsilon_2$ with respect to the infinitesimal number $\varepsilon_2$ associated with the different execution of the derivative operator program construct. The processor 102 extracts extracting a tangent $\mathbf{tg}\,\varepsilon_1\,d$ with respect to the infinitesimal number $\varepsilon_1$ associated with the respective execution of the derivative operator program construct from a tangent *d* of the dual number $c + d\varepsilon_2$ with respect to the infinitesimal number $\varepsilon_2$ associated with the different execution of the derivative operator program construct. The processor 102 determines the first tangent $\mathbf{tg}\,\varepsilon_1\,f(x + 1\varepsilon_1)$ as a dual number formed with the tangent $\mathbf{tg}\,\varepsilon_1$ c as primal, with the tangent $\mathbf{tg}\,\varepsilon_1$ d as tangent, and with the infinitesimal number $\varepsilon_2$ associated with the different execution of the derivative operator program construct, in accordance with equation (8c), e.g. $$\mathbf{tg}\,\varepsilon_1\,(c + d\varepsilon_2) \triangleq (\mathbf{tg}\,\varepsilon_1\,c) + (\mathbf{tg}\,\varepsilon_1\,d)\varepsilon_2$$.

In the embodiments utilizing tag substitution (second method), for each respective execution of the derivative operator program construct $\mathscr{D}$, the processor 102 may also extract the tangent $\mathbf{tg}\,\varepsilon_1\,f(x + 1\varepsilon_1)$ from the result $f(x + 1\varepsilon_1)$ according to equation (23). In response to the result $f(x + 1\varepsilon_1)$ defining a mathematical function $\bar{g}$ which takes an argument *y* as input, the processor 102 extracts the tangent $\mathbf{tg}\,\varepsilon_1\,f(x + 1\varepsilon_1)$ according to equation (23). First, the processor 102 determines a result $[\varepsilon/\varepsilon_1]y$ by substituting, in the argument *y*, the infinitesimal number $\varepsilon_1$ associated with the respective execution of the derivative operator program construct with a temporary infinitesimal number $\varepsilon$ having a temporary unique tag. Next, the processor 102 determines a result $\bar{g} \circ [\varepsilon/\varepsilon_1]\,y$ by applying the mathematical function $\bar{g}$ to the result $[\varepsilon/\varepsilon_1]y$. Next, the processor 102 extracts a tangent $(\mathbf{tg}\,\varepsilon_1) \circ \bar{g} \circ [\varepsilon/\varepsilon_1]\,y$ with respect to the infinitesimal number $\varepsilon_1$ associated with the respective execution of the derivative operator program construct from the result $\bar{g} \circ [\varepsilon/\varepsilon_1]\,y$. Finally, the processor 102 determines the tangent $\mathbf{tg}\,\varepsilon_1\,f(x + 1\varepsilon_1)$ by substituting, in the tangent $(\mathbf{tg}\,\varepsilon_1) \circ \bar{g} \circ [\varepsilon/\varepsilon_1]\,y$, the temporary infinitesimal number having the temporary unique tag with the infinitesimal number associated with the respective execution of the derivative operator program construct, according to equation (23), i.e. $$\mathbf{tg}\,\varepsilon_1\bar{g}\,y \triangleq \mathbf{fresh}\ \varepsilon\ \mathbf{in}\ ([\varepsilon_1/\varepsilon] \circ (\,\mathbf{tg}\,\varepsilon_1) \circ \bar{g} \circ [\varepsilon/\varepsilon_1])\,y$$.

It will be appreciated that the determining the result $\bar{g} \circ [\varepsilon/\varepsilon_1]\,y$ may involve a nested execution of the derivative operator program construct $\mathscr{D}$. The nested execution of the derivative operator program construct includes forming a dual number with a further infinitesimal number $\varepsilon_2$ having a further unique tag. In this way, the tag substitution embodiments involved nested calculations using the derivative operator program construct *9,* in which each calculation is provided a fresh unique tag.

In the embodiments utilizing tag substitution (second method), for each performance of the substitution operation $[\varepsilon_1/\varepsilon_2]$, the processor 102 determines a respective substitution output by substituting, in a respective substitution input, infinitesimal numbers $\varepsilon_2$ having a second unique tag with infinitesimal numbers $\varepsilon_1$ having a first unique tag according to equations (24a), (24b), (24c), and (24d). In response to the respective substitution input defining a real number, the processor 102 determines the respective substitution output as being equal to the respective substitution input, in accordance with equation (24a), i.e. $[\varepsilon_1/\varepsilon_2]\, a \triangleq a$. In response to the respective substitution input defining a dual number $a + b\varepsilon_2$ having only infinitesimal numbers $\varepsilon_2$ having the second unique tag, the processor 102 determines the respective substitution output by substituting, in the dual number $a + b\varepsilon_2$, infinitesimal numbers $\varepsilon_2$ having the second unique tag with infinitesimal numbers $\varepsilon_1$ having the first unique tag, in accordance with equation (24b), i.e.

$$[\varepsilon_1/\varepsilon_2]\,(a + b\varepsilon_2) \triangleq a + b\varepsilon_1.$$

In response to the respective substitution input defining a dual number $a + b\varepsilon$ having infinitesimal numbers $\varepsilon$ having a further unique tag, the processor 102 determines the respective substitution output according to equation (24c). The processor 102 determines a result $[\varepsilon_1/\varepsilon_2]a$ by substituting infinitesimal numbers $\varepsilon_2$ having the second unique tag with infinitesimal numbers $\varepsilon_1$ having the first unique tag, in a primal $a$ of the dual number $a + b\varepsilon$ with respect to the infinitesimal numbers $\varepsilon$ having the further unique tag. Next, the processor 102 determines a result $[\varepsilon_1/\varepsilon_2]b$ by substituting infinitesimal numbers $\varepsilon_2$ having the second unique tag with infinitesimal numbers $\varepsilon_1$ having the first unique tag, in a tangent $b$ of the dual number $a + b\varepsilon$ with respect to the infinitesimal numbers $\varepsilon$ having the further unique tag. Finally, the processor 102 determines the respective substitution output as a dual number formed with the result $[\varepsilon_1/\varepsilon_2]a$ as primal, with the result $[\varepsilon_1/\varepsilon_2]b$ as tangent, and with the infinitesimal number $\varepsilon$ having the further unique tag, in accordance with equation (24c), i.e.

$$[\varepsilon_1/\varepsilon_2]\,(a + b\varepsilon) \triangleq ([\varepsilon_1/\varepsilon_2]a) + {}_{([\varepsilon_1/\varepsilon_2]b)\varepsilon.}$$

In response to the respective substitution input defining a mathematical function $\overline{g}$ which takes an argument $y$ as input, the processor 102 determines the respective substitution output according to equation (24d). The processor 102 determines a result $[\varepsilon/\varepsilon_2]y$ by substituting infinitesimal numbers $\varepsilon_2$ having the second unique tag with infinitesimal numbers $\varepsilon$ having a temporary unique tag in the argument $y$. Next, the processor 102 determines a result $\overline{g} \circ [\varepsilon/\varepsilon_2]\, y$ as derivative of the result $[\varepsilon/\varepsilon_2]y$. Next, the processor 102 determines a result $[\varepsilon_1/\varepsilon_2] \circ \overline{g} \circ [\varepsilon/\varepsilon_2]\, y$ by substituting infinitesimal numbers $\varepsilon_2$ having the second unique tag with infinitesimal numbers $\varepsilon_1$ having the first unique tag in the result $\overline{g} \circ [\varepsilon/\varepsilon_2]\, y$. Finally, the processor 102 determines the respective substitution output by substituting infinitesimal numbers $\varepsilon$ having the temporary unique tag with infinitesimal numbers having the second unique tag $\varepsilon_2$ in the result, in accordance with equation (23), i.e.

$$[\varepsilon_1/\varepsilon_2]\,\overline{g}\, y \triangleq \mathbf{fresh}\ \varepsilon\ \mathbf{in}\ ([\varepsilon_2/\varepsilon] \circ [\varepsilon_1/\varepsilon_2] \circ \overline{g} \circ [\varepsilon/\varepsilon_2])\, y.$$

It should be appreciated that, depending on the programming languages used, the substitution operation described above can equivalently be performed using other mechanisms by wrapping the derivative calculations in prologue and epilogue code that creates new distinguishing features and substitutes them for the distinguishing feature of the wrapped procedure in its argument before invoking the wrapped procedure, and reverses the process for the output of the wrapped procedure.

In some embodiments, the first program code may define a first mathematical function $f$ whose range and domain are both functions or, in other words, the first mathematical $f$ takes arguments $x$ and $x'$ as inputs, which may be themselves functions of an argument $y$. In these cases, the processor 102 is configured to utilize a derivative operator program construct $\overrightarrow{\mathscr{J}}$ instead of the derivative operator program construct $\mathscr{D}$.

In the determination of the second mathematical function $f'$, the processor 102 implements three steps for each respective execution of the derivative operator program construct $\overrightarrow{\mathscr{J}}$. First, the processor 102 forms a bundle $\mathbf{bun}\ \varepsilon_1\, x\, x'$ including with the arguments $x$ and $x'$ with respect to an infinitesimal number $\varepsilon_1$ having a unique tag (i.e., the subscript of the infinitesimal number $\varepsilon_1$) that uniquely associates it with the respective execution of the derivative operator program construct. Next, the processor 102 determines a result $f(\mathbf{bun}\ \varepsilon_1\, x\, x')$ by applying the first mathematical function $f$ with the bundle $\mathbf{bun}\ \varepsilon_1\, x\, x'$ as input. Finally, the processor 102 extracts a tangent from the result $f(\mathbf{bun}\ \varepsilon_1\, x\, x')$ with respect to the infinitesimal number $\varepsilon_1$ associated with the respective execution of the derivative operator program construct, i.e. $\mathbf{tg}\ \varepsilon_1\, f(\mathbf{bun}\ \varepsilon_1\, x\, x')$, in accordance with equations (32b) or (33). These steps are performed for each particular execution of the derivative operator program construct $\overrightarrow{\mathscr{J}}$.

As used herein, a "bundle" formed with a first argument and a second argument with respect to a particular infinitesimal number refers to a dual number formed with first argument as primal, with the second argument as tangent, and with the particular infinitesimal number. In the case that the first and second arguments are functions of a third argument, then the functions are applied to the third argument before forming the dual number.

In embodiments utilizing eta expansion (first method), the processor 102 eta-expands the first mathematical function until all of the multiple executions of the derivative operator program construct $\overrightarrow{\mathscr{J}}$ will result in non-function-containing results, in accordance with equations (32a) and (32b). This eta expansion is performed prior to the forming of the bundle $\mathbf{bun}\ \varepsilon_1\, x\, x'$, the determining of the result $f(\mathbf{bun}\ \varepsilon_1\, x\, x')$, and the extracting of the tangent $\mathbf{tg}\ \varepsilon_1\, f(\mathbf{bun}\ \varepsilon_1\, x\, x')$, for

each of the multiple executions of the derivative operator program construct $\overrightarrow{\mathcal{J}}$. The processor 102 determines the second mathematical function $f'$ as a result of the multiple executions of the derivative operator program construct $\overrightarrow{\mathcal{J}}$ in the eta expansion of the first mathematical function $f$ according to equation.

In embodiments utilizing tag substitution (second method), the processor 102 determines the second mathematical function $f'$ as being equal to the tangent $\mathbf{tg}\,\varepsilon_1\,f(\mathbf{bun}\,\varepsilon_1\,x\,x')$ in the outermost calculation using the derivative operator program construct $\overrightarrow{\mathcal{J}}$, in accordance with equation (33), i.e. $\overrightarrow{\mathcal{J}}\,f\,x\,x' \triangleq \mathbf{fresh}\,\varepsilon\,\mathbf{in}\,\mathbf{tg}\,\varepsilon\,_{f(\mathbf{bun}\,\varepsilon_1\,x\,x')}$. It will be appreciated that, in embodiments utilizing tag substitution, calculations using the derivative operator program construct $\overrightarrow{\mathcal{J}}$ are nested and the outermost calculation refers to the final completed calculation using the using the derivative operator program construct $\overrightarrow{\mathcal{J}}$.

Regardless of whether eta expansion (first method) or tag substitution (second method) is utilized, for each respective execution of the derivative operator program construct $\overrightarrow{\mathcal{J}}$, in response to the arguments $x$ and $x'$ not defining or containing functions, the processor 102 determines the bundle $\mathbf{bun}\,\varepsilon_1\,x\,x'$ as a dual number $x + x'\varepsilon_1$ formed with the first argument $x$ as primal, with the second argument $x'$ as tangent, and with the infinitesimal number $\varepsilon_1$ associated with the respective execution of the derivative operator program construct $\overrightarrow{\mathcal{J}}$. However, as noted below, in at least some cases the arguments $x$ and $x'$ are instead some functions of an argument $y$, i.e. $x = (f\,y)$ and $x' = (f'\,y)$.

In the embodiments utilizing eta expansion (first method), for each respective execution of the derivative operator program construct $\overrightarrow{\mathcal{J}}$, the processor 102 also determines the bundle $\mathbf{bun}\,\varepsilon_1\,x\,x'$ according to equation (30b), in response to the arguments $x$ and $x'$ defining some functions of a further argument $y$, i.e. $x = (f\,y)$ and $x' = (f'\,y)$. The processor 102 determines a result $(f\,y)$ by applying the mathematical function $x = f$ with the argument $y$ as input. Next, the processor 102 determines a result $(f'\,y)$ by applying the mathematical function $x' = f'$ with the argument $y$ as input. Finally, the processor and (iii) determining the bundle $\mathbf{bun}\,\varepsilon_1\,x\,x' = \mathbf{bun}\,\varepsilon_1\,f\,f'y$ as a dual number $(f\,y) + (f'\,y)\varepsilon_1$ formed with the result $x = (f\,y)$ as primal, with the result $x' = (f'\,y)$ as tangent, and with the infinitesimal number $\varepsilon_1$ associated with the respective execution of the derivative operator program construct $\overrightarrow{\mathcal{J}}$, i.e. $\mathbf{bun}\,\varepsilon_1\,f\,f'y \triangleq \mathbf{bun}\,\varepsilon_1\,(fy)(f'y)$.

In the embodiments utilizing tag substitution (second method), for each respective execution of the derivative operator program construct $\overrightarrow{\mathcal{J}}$, the processor 102 may also determine the bundle $\mathbf{bun}\,\varepsilon_1\,x\,x'$ according to equation (31), in response to the arguments $x$ and $x'$ defining some functions of a further argument $y$, i.e. $x = (fy)$ and $x' = (f'y)$, The processor 102 determines a result $[\varepsilon/\varepsilon_1]y$ by substituting infinitesimal numbers $\varepsilon_1$ having the second unique tag with infinitesimal numbers $\varepsilon$ having a temporary unique tag in the argument $y$. Next, the processor 102 determines a result $(f([\varepsilon/\varepsilon_1]y))$ by applying the mathematical function $x = f$ with the result $[\varepsilon/\varepsilon_1]y$ as input. Next, the processor 102 determines a result $(f'([\varepsilon/\varepsilon_1]y))$ by applying the mathematical function $x' = f'$ with the result $[\varepsilon/\varepsilon_1]y$ as input. Next, the processor 102 determines a bundle $\mathbf{bun}\,\varepsilon_1\,(f[\varepsilon/\varepsilon_1]y)(f'[\varepsilon/\varepsilon_1]y)$ as a dual number $(f([\varepsilon/\varepsilon_1]y)) + (f'([\varepsilon/\varepsilon_1]y))\varepsilon_1$ formed with the result $(f([\varepsilon/\varepsilon_1]y))$ as primal, with the result $(f'([\varepsilon/\varepsilon_1]y))$ as tangent, and with the infinitesimal number $\varepsilon_1$ associated with the respective execution of the derivative operator program construct $\overrightarrow{\mathcal{J}}$. Finally, the processor 102 determines the the bundle $\mathbf{bun}\,\varepsilon_1\,x\,x' = \mathbf{bun}\,\varepsilon_1\,f\,f'y$ by substituting, in the bundle $\mathbf{bun}\,\varepsilon_1\,(f[\varepsilon/\varepsilon_1]y)(f'[\varepsilon/\varepsilon_1]y)$, the infinitesimal numbers $\varepsilon$ having a temporary unique tag with the infinitesimal numbers $\varepsilon_1$ associated with the respective execution of the derivative operator program construct $\overrightarrow{\mathcal{J}}$, i.e.

$$\mathbf{bun}\,\varepsilon_1\,f\,f'y \triangleq \mathbf{fresh}\,\varepsilon\,\mathbf{in}\,[\varepsilon/\varepsilon_1](\mathbf{bun}\,\varepsilon_1\,(f[\varepsilon/\varepsilon_1]y)(f'[\varepsilon/\varepsilon_1]y)).$$

With continued reference to FIG. 2, the method 200 continues with a step of returning, outputting, or storing at least one of (i) second program code defining function $f'$, and (ii) a result of the function $f'$ at one or more values for the argument $x$. (block 270). The processor 102 is configured to return, output, or store at least one of (i) second program code defining function $f'$, and (ii) a result of the function $f'$ at one or more values for the argument $x$. As noted above, in some embodiments a program $P$, which has some arbitrary purpose, may invoke the derivative operator program construct $\mathcal{D}$, providing the first program code defining the first mathematical function $f$ as an argument of the derivative operator program construct $\mathcal{D}$. In some cases, the program $P$ provides one or more particular values for the argument $x$ as a further argument of the derivative operator program construct $\mathcal{D}$. The processor 102 returns to the program $P$ at least one of (i) second program code defining second mathematical function $f'$, and (ii) a result of the second mathematical function $f'$ at the one or more values for the argument $x$. In practice, this may include storing the returns the memory 104 or otherwise outputting the returns such that they are provided to and accessibly by the program $P$.

In embodiments utilizing source transformation, the processor 102 may generate and return the second program code defining second mathematical function $f'$, which can then be executed in the program $P$ to evaluate the second mathematical function $f'$ at one or more values for the argument $x$. However, in embodiments utilizing operator overloading, the processor 102 may simply evaluate and return results of the second mathematical function $f'$ at the one or more values for the argument $x$.

Exemplary Implementations of the Automatic Differentiation Program

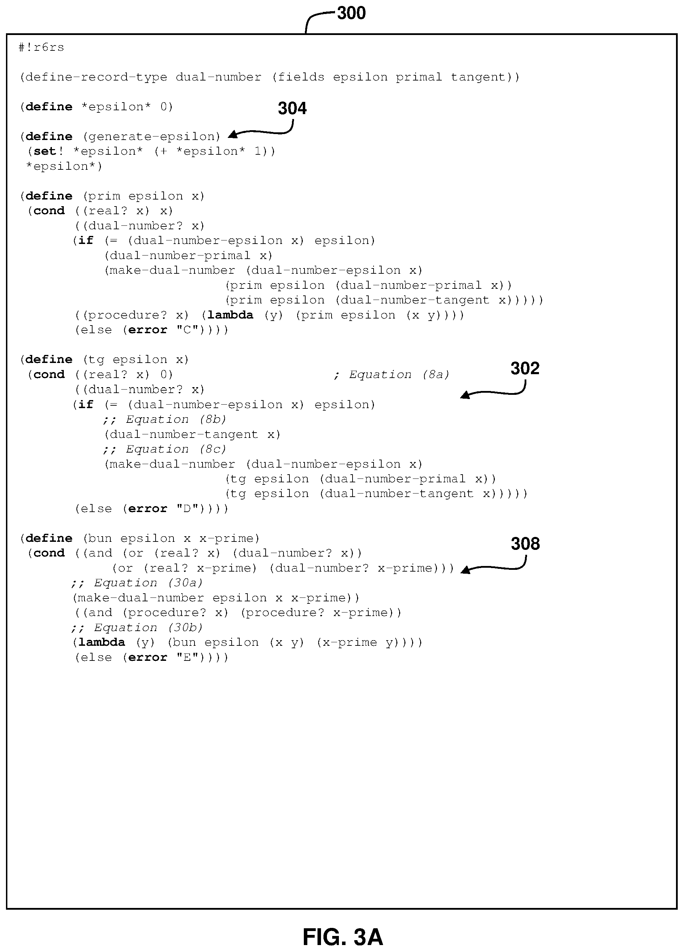

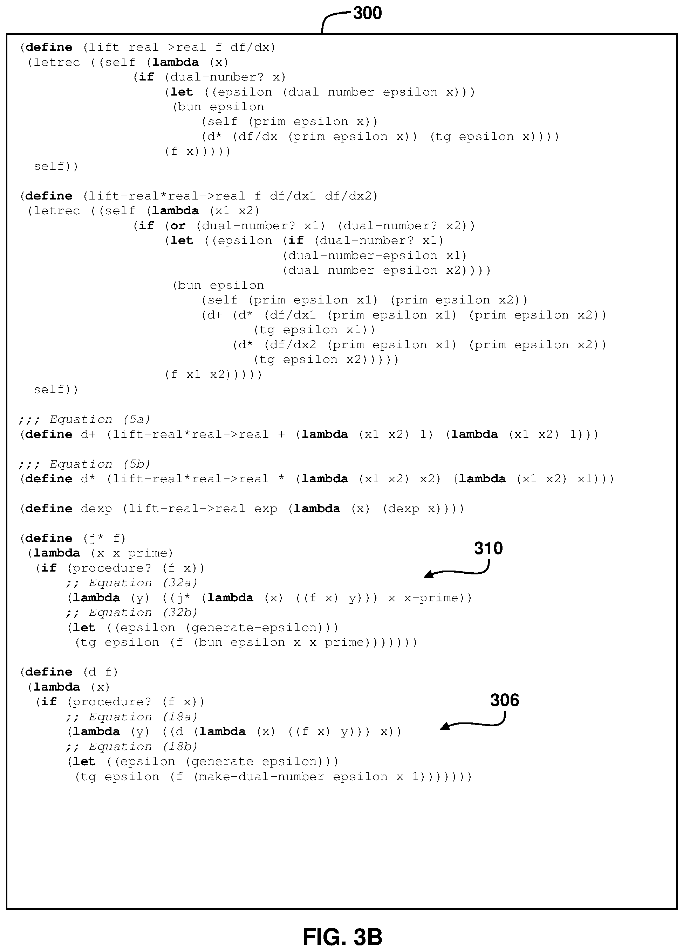

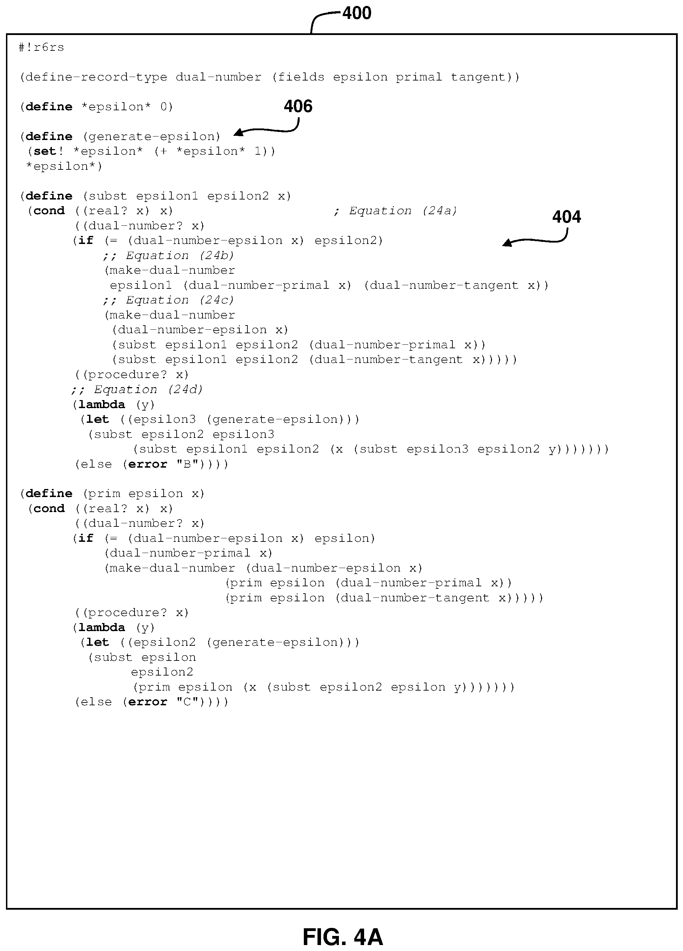

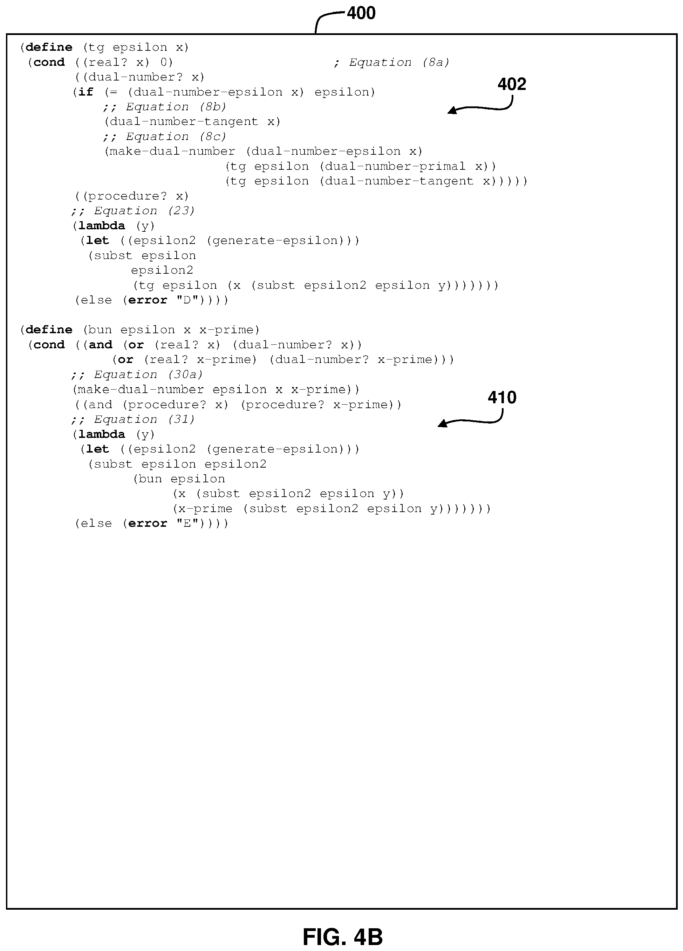

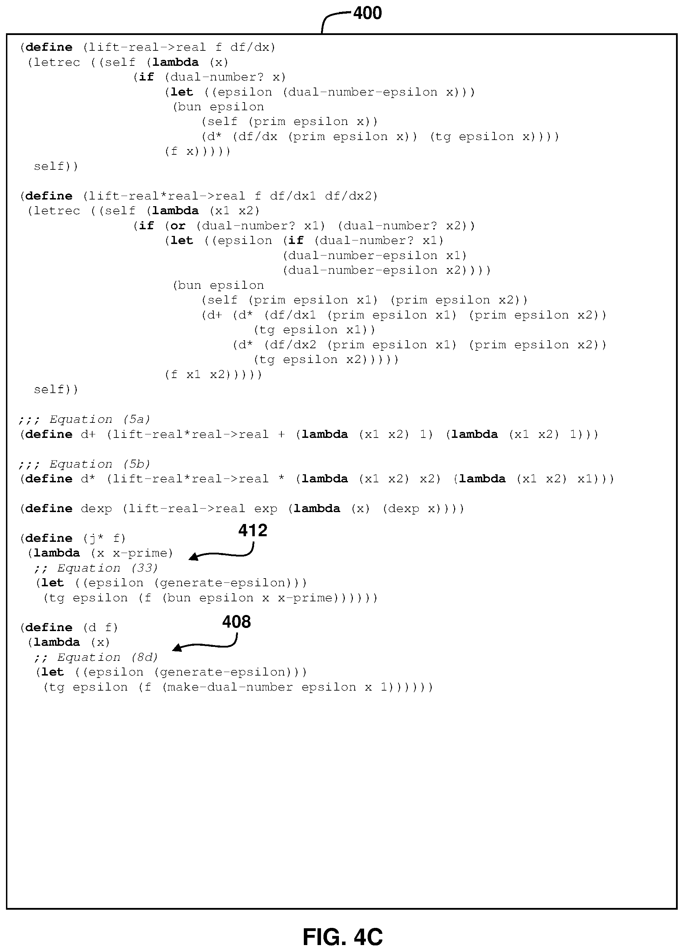

FIGS. 3A-3B and FIGS. 4A-4C show program code for exemplary minimal implementations of the automatic differentiation program 112. These exemplary minimal implementations are not intended as a full practical implementation but rather has the expository purpose of explaining the ideas presented in this disclosure.

FIGS. 3A-3B show program code 300 for exemplary minimal implementations of the automatic differentiation program 112 which implements the first method described above that utilizes the eta expansion technique. The program code 300 includes a program code fragment 302, which implements the **tg** operation using equations (8a), (8b), and (8c). The program code 300 further includes a program code fragment 304, which implements the **fresh** $\varepsilon$ operation. The program code 300 further includes a program code fragment 306, which implements the $\mathcal{D}$ operation that materializes $\mathbb{D}$ using equations (18a) and (18b). The program code 300 further includes a program code fragment 308, which implements the **bun** operation using equations (30a) and (30b). The program code 300 further includes a program code fragment 310, which implements the $\mathcal{J}$ operation that materializes $\vec{\mathbb{J}}$ using equations (32a) and (32b).

FIGS. 4A-4C show program code 400 for exemplary minimal implementations of the automatic differentiation program 112 which implements the second method described above that utilizes the tag substitution technique. The program code 400 includes a program code fragment 402, which implements the **tg** operation using equations (8a), (8b), (8c), and (23). The program code 400 further includes a program code fragment 404, which implements the $[\varepsilon_1/\varepsilon_2]$ operation using equations (24a), (24b), (24c), and (24d). The program code 400 further includes a program code fragment 406, which implements the **fresh** $\varepsilon$ operation. The program code 400 further includes a program code fragment 408, which implements the $\mathcal{D}$ operation that materializes $\mathbb{D}$ using equations (8d). The program code 400 further includes a program code fragment 410, which implements the **bun** operation using equations (30a) and (31). The program code 400 further includes a program code fragment 412, which implements the $\mathcal{J}$ operation that materializes $\vec{\mathbb{J}}$ using equation (33).

While the disclosure has been illustrated and described in detail in the drawings and foregoing description, the same should be considered as illustrative and not restrictive in character.

**Claims**

1. A method for automatic differentiation of a function defined by program code, the method comprising:

    storing, in at least one memory, an automatic differentiation program (112) having a derivative operator program construct that implements a mathematical derivative operator;

    receiving, with at least one processor (102), first program code defining a first mathematical function, the first mathematical function being a higher-order function which takes a first argument as input; and

    determining, by executing the automatic differentiation program (112) with the at least one processor (102), a second mathematical function, the second mathematical function being a derivative of the first mathematical function, the determining of the second mathematical function including multiple executions of the derivative operator program construct, each execution of the derivative operator program construct being distinguished from one another using unique distinguishing features,

    receiving, with the at least one processor (102), a value for the first argument;

    determining, with the at least one processor (102), a result by evaluating the second mathematical function at the received value for the first argument;

    storing, in the at least one memory, the result;

    generating, with the at least one processor (102), second program code that defines the second mathematical function; and

    storing, in the at least one memory, the second program code;

wherein for each respective execution of the derivative operator program construct, the determining of the second mathematical function comprising:

forming a first dual number with the first argument as primal, with one as tangent, and with an infinitesimal number having a unique tag that uniquely associates it with the respective execution of the derivative operator program construct;

determining a first result by applying the first mathematical function with the respective first dual number as input; and

extracting a first tangent from the first result with respect to the infinitesimal number associated with the respective execution of the derivative operator program construct; wherein for each execution of the derivative operator program construct, the extracting the first tangent comprising:

in response to the first result defining a real number, determining the first tangent as zero;

in response to the first result defining a second dual number having only the infinitesimal number associated with the respective execution of the derivative operator program construct, determining the first tangent as a tangent of the second dual number with respect to the infinitesimal number associated with the respective execution of the derivative operator program construct; and

in response to the first result defining a third dual number having an infinitesimal number associated with a different execution of the derivative operator program construct, (i) extracting a second tangent with respect to the infinitesimal number associated with the respective execution of the derivative operator program construct from a primal of the third dual number with respect to the infinitesimal number associated with the different execution of the derivative operator program construct, (ii) extracting a third tangent with respect to the infinitesimal number associated with the respective execution of the derivative operator program construct from a tangent of the third dual number with respect to the infinitesimal number associated with the different execution of the derivative operator program construct, and (iii) determining the first tangent as a dual number formed with the second tangent as primal, with the third tangent as tangent, and with the infinitesimal number associated with the different execution of the derivative operator program construct;

wherein for each execution of the derivative operator program construct, the extracting the first tangent comprising:

in response to the first result defining a third mathematical function which takes a second argument as input, (i) determining a second result by substituting, in the second argument, each occurrence of the infinitesimal number associated with the respective execution of the derivative operator program construct with a temporary infinitesimal number having a temporary unique tag, (ii) determining a third result by applying the third mathematical function to the second result, (iii) extracting a fourth tangent with respect to the infinitesimal number associated with the respective execution of the derivative operator program construct from the third result, and (iv) determining the first tangent by substituting, in the fourth tangent, each occurrence of the temporary infinitesimal number having the temporary unique tag with the infinitesimal number associated with the respective execution of the derivative operator program construct;

wherein the first mathematical function is one whose range and domain are both functions, the first mathematical function taking the first argument and a second argument as inputs;

wherein for each respective execution of the derivative operator program construct, the determining of the second mathematical function comprising:

forming a first bundle with the first argument and the second argument and with respect to an infinitesimal number having a unique tag that uniquely associates it with the respective execution of the derivative operator program construct;

determining a first result by applying the first mathematical function with the respective first bundle as input; and

extracting a first tangent from the first result with respect to the infinitesimal number associated with the respective execution of the derivative operator program construct.

2. The method according to claim 1, the determining of the second mathematical function comprising:
determining the second mathematical function using one of (i) forward mode automatic differentiation, (ii) reverse mode automatic differentiation, (iii) checkpointing based reverse mode automatic differentiation, and (iii) a hybrid mode automatic differentiation.

3. The method according to claim 1, the determining of the second mathematical function comprising:

eta expanding the first mathematical function until all of the multiple executions of the derivative operator program construct will result in non-function-containing results,

wherein the eta expanding is performed prior to the forming of the first dual number, the determining of the first result, and the extracting of the first tangent, for each of the multiple executions of the derivative operator program construct.

4. The method according to claim 3, the determining of the second mathematical function comprising:
determining the second mathematical function as a result of the multiple executions of the derivative operator program construct in the eta expansion of the first mathematical function.

5. The method according to claim 1, in each case, the substituting comprising:

determining a respective output by substituting, in a respective input, each occurrence of an infinitesimal number having a second unique tag with an infinitesimal number having a first unique tag,

wherein, in response to the respective input defining a real number, the respective output is determined as being equal to the respective input, and

wherein, in response to the respective input defining a fourth dual number having only infinitesimal numbers having the first unique tag, the respective output is determined by substituting, in the fourth dual number, each occurrence of the infinitesimal number having the second unique tag with the infinitesimal number having the first unique tag.

6. The method according to claim 5, wherein, in response to the respective input defining a fifth dual number having infinitesimal numbers having a third unique tag, the respective output is determined by (i) determining a fourth result by substituting each occurrence of the infinitesimal number having the second unique tag with the infinitesimal number having the first unique tag, in a primal of the fifth dual number with respect to the infinitesimal numbers having the third unique tag, (ii) determining a fifth result by substituting each occurrence of the infinitesimal number having the second unique tag with the infinitesimal number having the first unique tag in a tangent of the fifth dual number with respect to the infinitesimal numbers having the third unique tag, and (iii) determining the respective output as a dual number formed with the fourth result as primal, with the fifth result as tangent, and with the infinitesimal number having the third unique tag.

7. The method according to claim 5, wherein, in response to the respective input defining a fourth mathematical function which takes a third argument as input, (i) determining a sixth result by substituting each occurrence of the infinitesimal number having the second unique tag with the infinitesimal number having a temporary unique tag in the third argument, (ii) determining a seventh result by applying the fourth mathematical function to the sixth result, (iii) determining an eighth result by substituting each occurrence of the infinitesimal number having the second unique tag with the infinitesimal number having the first unique tag in the seventh result, and (v) determining the respective output by substituting each occurrence of the infinitesimal number having the temporary unique tag with the infinitesimal number having the second unique tag in the sixth result.

8. The method of claim 1, the determining of the second mathematical function comprising:

eta expanding the first mathematical function until all of the multiple executions of the derivative operator program construct will result in non-function-containing results,

wherein the eta expanding is performed prior to the forming of the first bundle, the determining of the first result, and the extracting of the first tangent, for each of the multiple executions of the derivative operator program construct.

9. The method according to claim 8, for each execution of the derivative operator program construct, the forming the first bundle comprising:

in response to the first argument not defining a function and the second argument not defining a function, determining the first bundle as a dual number formed with the first argument as primal, with the second argument as tangent, and with the infinitesimal number associated with the respective execution of the derivative operator program construct; and

in response to the first argument defining a third mathematical function which takes a third argument as input and the second argument defining a fourth mathematical function which takes the third argument as input, (i) determining a second result by applying the third mathematical function with the third argument as input, (ii) determining a third result by applying the fourth mathematical function with the third argument as input, and (iii) determining the first bundle as a dual number formed with the second result as primal, with the third result as tangent, and with the infinitesimal number associated with the respective execution of the derivative operator program construct.

10. The method according to claim 1, for each execution of the derivative operator program construct, the forming the first bundle comprising:

in response to the first argument not defining a function and the second argument not defining a function, determining the first bundle as a dual number formed with the first argument as primal, with the second argument as tangent, and with the infinitesimal number associated with the respective execution of the derivative operator program construct; and

in response to the first argument defining a third mathematical function which takes a third argument as input and the second argument defining a fourth mathematical function which takes the third argument as input, (i) determining a second result by substituting, in the third argument, each occurrence of the infinitesimal number associated with the respective execution of the derivative operator program construct with a temporary infinitesimal number having a temporary unique tag, (ii) determining a third result by applying the third mathematical function with the third argument as input, (iii) determining a fourth result by applying the fourth mathematical function with the third argument as input, (iv) determining a second bundle as a dual number formed with the third result as primal, with the fourth result as tangent, and with the infinitesimal number associated with the respective execution of the derivative operator program construct, and (v) determining the first bundle by substituting, in the second bundle, each occurrence of the infinitesimal number having a temporary unique tag with the infinitesimal number associated with the respective execution of the derivative operator program construct.

11. A system for automatic differentiation of a function defined by program code, the system comprising:

at least one memory configured to store program instructions including an automatic differentiation program (112) having a derivative operator program construct that implements a mathematical derivative operator; and

at least one processor (102) configured to execute the program instructions stored on the at least one memory to carry out the method of any of claims 1 to 10.

12. A non-transitory computer-readable medium for automatic differentiation of a function defined by program code, the computer-readable medium storing program instructions that when executed by at least one processor (102), cause the at least one processor (102) to implement the method of any of claims 1 to 10.

**Patentansprüche**

1. Verfahren zur automatischen Differenzierung einer durch Programmcode definierten Funktion, wobei das Verfahren umfasst:

Speichern eines automatischen Differenzierungsprogramms (112) mit einem Ableitungsoperator-Programmkonstrukt, das einen mathematischen Ableitungsoperator implementiert, in mindestens einem Speicher;

Empfangen, mit mindestens einem Prozessor (102), eines ersten Programmcodes, der eine erste mathematische Funktion definiert, wobei die erste mathematische Funktion eine Funktion höherer Ordnung ist, die ein erstes Argument als Eingabe annimmt; und

Bestimmen, durch Ausführen des automatischen Differenzierungsprogramms (112) mit dem mindestens einen Prozessor (102), einer zweiten mathematischen Funktion, wobei die zweite mathematische Funktion eine Ableitung der ersten mathematischen Funktion ist, wobei das Bestimmen der zweiten mathematischen Funktion mehrere Ausführungen des Ableitungsoperator-Programmkonstrukts umfasst, wobei jede Ausführung des Ableitungsoperator-Programmkonstrukts unter Verwendung eindeutiger Unterscheidungsmerkmale voneinander unterschieden wird,

Empfangen eines Wertes für das erste Argument mit dem mindestens einen Prozessor (102);

Bestimmen, mit dem mindestens einen Prozessor (102), eines Ergebnisses durch Auswerten der zweiten mathematischen Funktion mit dem empfangenen Wert für das erste Argument;

Speichern des Ergebnisses in dem mindestens einen Speicher;

Erzeugen, mit dem mindestens einen Prozessor (102), eines zweiten Programmcodes, der die zweite mathematische Funktion definiert; und

Speichern des zweiten Programmcodes in dem mindestens einen Speicher;

wobei für jede jeweilige Ausführung des Ableitungsoperator-Programmkonstrukts das Bestimmen der zweiten mathematischen Funktion umfasst:

Bilden einer ersten Dualzahl mit dem ersten Argument als Hauptargument, mit einem als Tangente und mit einer Infinitesimalzahl, die eine eindeutige Markierung hat, die sie eindeutig mit der jeweiligen Ausführung des Ableitungsoperator-Programmkonstrukts verbindet;

Bestimmen eines ersten Ergebnisses durch Anwendung der ersten mathematischen Funktion mit der jeweiligen ersten Dualzahl als Eingabe; und

Extrahieren eines ersten Tangens aus dem ersten Ergebnis in Bezug auf die infinitesimale Zahl, die mit der jeweiligen Ausführung des Ableitungsoperator-Programmkonstrukts verbunden ist;

wobei für jede Ausführung des Ableitungsoperator-Programmkonstrukts das Extrahieren des ersten Tangens umfasst:

als Reaktion auf das erste Ergebnis, das eine reelle Zahl definiert, Bestimmen des ersten Tangens als Null;

als Reaktion auf das erste Ergebnis, das eine zweite Dualzahl definiert, die nur die Infinitesimalzahl hat, die mit der jeweiligen Ausführung des Ableitungsoperator-Programmkonstrukts verbunden ist, Bestimmen des ersten Tangens als Tangens der zweiten Dualzahl in Bezug auf die Infinitesimalzahl, die mit der jeweiligen Ausführung des Ableitungsoperator-Programmkonstrukts verbunden ist; und

als Reaktion auf das erste Ergebnis, das eine dritte Dualzahl mit einer Infinitesimalzahl definiert, die mit einer anderen Ausführung des Konstrukts des Ableitungsoperatorprogramms verbunden ist, (i) Extrahieren einer zweiten Tangente in Bezug auf die Infinitesimalzahl, die mit der jeweiligen Ausführung des Konstrukts des Ableitungsoperatorprogramms verbunden ist, aus einem Primzahlwert der dritten Dualzahl in Bezug auf die Infinitesimalzahl, die mit der anderen Ausführung des Konstrukts des Ableitungsoperatorprogramms verbunden ist, (ii) Extrahieren einer dritten Tangente bezüglich der infinitesimalen Zahl, die der jeweiligen Ausführung des Konstrukts des Ableitungsoperatorprogramms zugeordnet ist, aus einer Tangente der dritten Dualzahl bezüglich der infinitesimalen Zahl, die der unterschiedlichen Ausführung des Konstrukts des Ableitungsoperatorprogramms zugeordnet ist, und (iii) Bestimmen der ersten Tangente als eine Dualzahl, die mit der zweiten Tangente als Primzahl, mit der dritten Tangente als Tangente und mit der infinitesimalen Zahl gebildet wird, die der unterschiedlichen Ausführung des Konstrukts des Ableitungsoperatorprogramms zugeordnet ist;

wobei für jede Ausführung des Ableitungsoperator-Programmkonstrukts das Extrahieren des ersten Tangens umfasst:

als Reaktion auf das erste Ergebnis, das eine dritte mathematische Funktion definiert, die ein zweites Argument als Eingabe annimmt, (i) Bestimmen eines zweiten Ergebnisses, indem in dem zweiten Argument jedes Auftreten der infinitesimalen Zahl, die mit der jeweiligen Ausführung des Derivationsoperator-Programmkonstrukts verbunden ist, durch eine temporäre infinitesimale Zahl mit einer temporären eindeutigen Markierung ersetzt wird, (ii) Bestimmen eines dritten Ergebnisses durch Anwenden der dritten mathematischen Funktion auf das zweite Ergebnis, (iii) Extrahieren einer vierten Tangente bezüglich der infinitesimalen Zahl, die mit der jeweiligen Ausführung des Ableitungsoperator-Programmkonstrukts verbunden ist, aus dem dritten Ergebnis, und (iv) Bestimmen der ersten Tangente, indem in der vierten Tangente jedes Auftreten der temporären infinitesimalen Zahl mit der temporären eindeutigen Markierung durch die infinitesimale Zahl ersetzt wird, die mit der jeweiligen Ausführung des Ableitungsoperator-Programmkonstrukts verbunden ist;

wobei die erste mathematische Funktion eine ist, deren Bereich und Domäne beide Funktionen sind, wobei die erste mathematische Funktion das erste Argument und ein zweites Argument als Eingaben erhält;

wobei für jede jeweilige Ausführung des Ableitungsoperator-Programmkonstrukts das Bestimmen der zweiten mathematischen Funktion umfasst:

Bilden eines ersten Bündels mit dem ersten Argument und dem zweiten Argument und in Bezug auf eine infinitesimale Zahl mit einer eindeutigen Markierung, die sie eindeutig mit der jeweiligen Ausführung des Ableitungsoperator-Programmkonstrukts verknüpft;

Bestimmen eines ersten Ergebnisses durch Anwendung der ersten mathematischen Funktion mit dem jeweiligen ersten Bündel als Eingabe; und

Extrahieren eines ersten Tangens aus dem ersten Ergebnis in Bezug auf die infinitesimale Zahl, die mit der jeweiligen Ausführung des Ableitungsoperator-Programmkonstrukts verbunden ist.

2. Verfahren nach Anspruch 1, wobei das Bestimmen der zweiten mathematischen Funktion umfasst:
Bestimmen der zweiten mathematischen Funktion unter Verwendung einer der folgenden Methoden: (i) automatische Differenzierung im Vorwärtsmodus, (ii) automatische Differenzierung im Rückwärtsmodus, (iii) automatische Differenzierung im Rückwärtsmodus auf der Grundlage von Kontrollpunkten und (iii) automatische Differenzierung im Hybridmodus.

3. Verfahren nach Anspruch 1, wobei das Bestimmen der zweiten mathematischen Funktion umfasst:

eta-Expandieren der ersten mathematischen Funktion so lange, bis alle mehrfachen Ausführungen des Derivationsoperator-Programmkonstrukts zu nicht funktionshaltigen Ergebnissen führen,
wobei das eta-Expandieren vor dem Bilden der ersten Dualzahl, dem Bestimmen des ersten Ergebnisses und dem Extrahieren des ersten Tangens für jede der mehreren Ausführungen des Ableitungsoperator-Programmkonstrukts durchgeführt wird.

4. Verfahren nach Anspruch 3, wobei das Bestimmen der zweiten mathematischen Funktion umfasst:
Bestimmen der zweiten mathematischen Funktion als Ergebnis der mehrfachen Ausführungen des Ableitungsoperator-Programmkonstrukts in der eta-Expandierung der ersten mathematischen Funktion.

5. Verfahren nach Anspruch 1, wobei das Ersetzen jeweils umfasst:

Bestimmen einer jeweiligen Ausgabe, indem in einer jeweiligen Eingabe jedes Auftreten einer infinitesimalen Zahl mit einer zweiten eindeutigen Markierung durch eine infinitesimale Zahl mit einer ersten eindeutigen Markierung ersetzt wird,
wobei in Reaktion auf die jeweilige Eingabe, die eine reelle Zahl definiert, die jeweilige Ausgabe als gleich der jeweiligen Eingabe bestimmt wird, und
wobei als Reaktion auf die jeweilige Eingabe, die eine vierte Dualzahl definiert, die nur infinitesimale Zahlen mit der ersten eindeutigen Markierung enthält, die jeweilige Ausgabe bestimmt wird, indem in der vierten Dualzahl jedes Auftreten der infinitesimalen Zahl mit der zweiten eindeutigen Markierung durch die infinitesimale Zahl mit der ersten eindeutigen Markierung ersetzt wird.

6. Verfahren nach Anspruch 5, wobei als Reaktion auf die jeweilige Eingabe, die eine fünfte Dualzahl mit infinitesimalen Zahlen mit einer dritten eindeutigen Markierung definiert, die jeweilige Ausgabe bestimmt wird durch (i) Bestimmen eines vierten Ergebnisses durch Ersetzen jedes Auftretens der infinitesimalen Zahl mit der zweiten eindeutigen Markierung durch die infinitesimale Zahl mit der ersten eindeutigen Markierung in einem Primzahlwert der fünften Dualzahl in Bezug auf die infinitesimalen Zahlen mit der dritten eindeutigen Markierung, (ii) Bestimmen eines fünften Ergebnisses durch Ersetzen jedes Auftretens der infinitesimalen Zahl mit der zweiten eindeutigen Markierung durch die infinitesimale Zahl mit der ersten eindeutigen Markierung in einer Tangente der fünften Dualzahl in Bezug auf die infinitesimalen Zahlen mit der dritten eindeutigen Markierung, und (iii) Bestimmen der jeweiligen Ausgabe als eine Dualzahl, die mit dem vierten Ergebnis als Primzahl, mit dem fünften Ergebnis als Tangente und mit der infinitesimalen Zahl mit der dritten eindeutigen Markierung gebildet wird.

7. Verfahren nach Anspruch 5, wobei als Reaktion auf die jeweilige Eingabe, die eine vierte mathematische Funktion definiert, die ein drittes Argument als Eingabe annimmt, (i) ein sechstes Ergebnis bestimmt wird, indem jedes Auftreten der infinitesimalen Zahl mit der zweiten eindeutigen Markierung durch die infinitesimale Zahl mit einer temporären eindeutigen Markierung in dem dritten Argument ersetzt wird, (ii) ein siebtes Ergebnis bestimmt wird, indem die vierte mathematische Funktion auf das sechste Ergebnis angewendet wird, (iii) Bestimmen eines achten Ergebnisses durch Ersetzen jedes Auftretens der infinitesimalen Zahl mit der zweiten eindeutigen Markierung durch die infinitesimale Zahl mit der ersten eindeutigen Markierung in dem siebten Ergebnis, und (v) Bestimmen der jeweiligen Ausgabe durch Ersetzen jedes Auftretens der infinitesimalen Zahl mit der temporären eindeutigen Markierung durch die infinitesimale Zahl mit der zweiten eindeutigen Markierung in dem sechsten Ergebnis.

8. Verfahren nach Anspruch 1, wobei das Bestimmen der zweiten mathematischen Funktion umfasst:

Eta-Expandieren der ersten mathematischen Funktion so lange, bis alle mehrfachen Ausführungen des Derivationsoperator-Programmkonstrukts zu nicht funktionshaltigen Ergebnissen führen,
wobei das eta-Expandieren vor dem Bilden des ersten Bündels, dem Bestimmen des ersten Ergebnisses und dem Extrahieren des ersten Tangens für jede der mehreren Ausführungen des Ableitungsoperator-Programmkonstrukts durchgeführt wird.

9. Verfahren nach Anspruch 8, wobei für jede Ausführung des abgeleiteten Operatorprogrammkonstrukts das Bilden des ersten Bündels umfasst:

als Reaktion auf das erste Argument, das keine Funktion definiert, und das zweite Argument, das keine Funktion definiert, Bestimmen des ersten Bündels als eine Dualzahl, die mit dem ersten Argument als primärem, mit dem zweiten Argument als tangentialem und mit der infinitesimalen Zahl gebildet wird, die mit der jeweiligen Ausführung des Ableitungsoperator-Programmkonstrukts verbunden ist; und

als Reaktion darauf, dass das erste Argument eine dritte mathematische Funktion definiert, die ein drittes Argument als Eingabe nimmt, und das zweite Argument eine vierte mathematische Funktion definiert, die das dritte Argument als Eingabe nimmt, (i) Bestimmen eines zweiten Ergebnisses durch Anwenden der dritten mathematischen Funktion mit dem dritten Argument als Eingabe, (ii) Bestimmen eines dritten Ergebnisses durch Anwenden der vierten mathematischen Funktion mit dem dritten Argument als Eingabe, und (iii) Bestimmen des ersten Bündels als eine Dualzahl, die mit dem zweiten Ergebnis als primärem, mit dem dritten Ergebnis als tangentialem und mit der infinitesimalen Zahl gebildet wird, die mit der jeweiligen Ausführung des Ableitungsoperator-Programmkonstrukts verbunden ist.

10. Verfahren nach Anspruch 1, wobei für jede Ausführung des abgeleiteten Operatorprogrammkonstrukts das Bilden des ersten Bündels umfasst:

als Reaktion auf das erste Argument, das keine Funktion definiert, und das zweite Argument, das keine Funktion definiert, Bestimmen des ersten Bündels als eine Dualzahl, die mit dem ersten Argument als primärem, mit dem zweiten Argument als tangentialem und mit der infinitesimalen Zahl gebildet wird, die mit der jeweiligen Ausführung des Ableitungsoperator-Programmkonstrukts verbunden ist; und

als Reaktion auf das erste Argument, das eine dritte mathematische Funktion definiert, die ein drittes Argument als Eingabe annimmt, und das zweite Argument, das eine vierte mathematische Funktion definiert, die das dritte Argument als Eingabe annimmt, (i) Bestimmen eines zweiten Ergebnisses, indem in dem dritten Argument jedes Auftreten der infinitesimalen Zahl, die mit der jeweiligen Ausführung des Ableitungsoperator-Programmkonstrukts verbunden ist, durch eine temporäre infinitesimale Zahl mit einer temporären eindeutigen Markierung ersetzt wird, (ii) Bestimmen eines dritten Ergebnisses durch Anwenden der dritten mathematischen Funktion mit dem dritten Argument als Eingabe, (iii) Bestimmen eines vierten Ergebnisses durch Anwenden der vierten mathematischen Funktion mit dem dritten Argument als Eingabe, (iv) Bestimmen eines zweiten Bündels als eine duale Zahl, die mit dem dritten Ergebnis als primärem, mit dem vierten Ergebnis als tangentialem und mit der infinitesimalen Zahl gebildet wird, die mit der jeweiligen Ausführung des Konstrukts des Ableitungsoperatorprogramms assoziiert ist, und (v) Bestimmen des ersten Bündels durch Ersetzen jedes Auftretens der infinitesimalen Zahl mit einer temporären eindeutigen Markierung in dem zweiten Bündel mit der infinitesimalen Zahl, die mit der jeweiligen Ausführung des Konstrukts des Ableitungsoperatorprogramms assoziiert ist.

11. System zur automatischen Differenzierung einer durch Programmcode definierten Funktion, wobei das System Folgendes umfasst:

mindestens einen Speicher, der derart konfiguriert ist, dass er Programmanweisungen speichert, die ein automatisches Differenzierungsprogramm (112) mit einem Ableitungsoperator-Programmkonstrukt enthalten, das einen mathematischen Ableitungsoperator implementiert; und

mindestens einen Prozessor (102), der derart konfiguriert ist, dass er die in dem mindestens einen Speicher gespeicherten Programmanweisungen ausführt, um das Verfahren nach einem der Ansprüche 1 bis 10 auszuführen.

12. Nicht-transitorisches computerlesbares Medium zur automatischen Differenzierung einer durch Programmcode definierten Funktion, wobei das computerlesbare Medium Programmbefehle speichert, die, wenn sie von mindestens einem Prozessor (102) ausgeführt werden, den mindestens einen Prozessor (102) veranlassen, das Verfahren nach einem der Ansprüche 1 bis 10 durchzuführen.

**Revendications**

1. Méthode de différenciation automatique d'une fonction définie par un code de programme, comprenant:

stocker, dans au moins une mémoire, un programme de différenciation automatique (112) ayant une construction de programme d'opérateur dérivé qui met en œuvre un opérateur dérivé mathématique;

recevoir, avec au moins un processeur (102), un premier code de programme définissant une première fonction mathématique, la première fonction mathématique étant une fonction d'ordre supérieur qui prend un premier argument en entrée; et

déterminer, en exécutant le programme de différenciation automatique (112) avec l'au moins un processeur (102), une deuxième fonction mathématique, la deuxième fonction mathématique étant une dérivée de la première fonction mathématique, la détermination de la deuxième fonction mathématique comprenant de multiples exécutions de la construction du programme de l'opérateur dérivé, chaque exécution de la construction du programme de l'opérateur dérivé se distinguant l'une de l'autre à l'aide de caractéristiques distinctives uniques,

recevoir, avec l'au moins un processeur (102), une valeur pour le premier argument;

déterminer, avec l'au moins un processeur (102), un résultat en évaluant la deuxième fonction mathématique à la valeur reçue pour le premier argument;

stocker le résultat dans l'au moins une mémoire;

générer, avec l'au moins un processeur (102), un deuxième code de programme qui définit la deuxième fonction mathématique; et

stocker, dans l'au moins une mémoire, le deuxième code de programme;

où, pour chaque exécution respective de la construction de programme de l'opérateur de dérivation, la détermination de la seconde fonction mathématique comprend:

former un premier nombre dual avec le premier argument comme primal, avec un comme tangent, et avec un nombre infinitésimal ayant une étiquette unique qui l'associe de manière unique à l'exécution respective de la construction de programme de l'opérateur de dérivée;

déterminer un premier résultat en appliquant la première fonction mathématique avec le premier nombre dual respectif comme entrée; et

extraire une première tangente du premier résultat par rapport au nombre infinitésimal associé à l'exécution respective du programme de construction de l'opérateur de dérivation;

où, pour chaque exécution de la construction de programme de l'opérateur de dérivation, l'extraction de la première tangente comprend:

en réponse au premier résultat définissant un nombre réel, déterminer que la première tangente est nulle;

en réponse au premier résultat définissant un second nombre dual ayant seulement le nombre infinitésimal associé à l'exécution respective du programme de construction de l'opérateur dérivé, déterminer la première tangente comme une tangente du second nombre dual par rapport au nombre infinitésimal associé à l'exécution respective du programme de construction de l'opérateur dérivé; et

en réponse au premier résultat définissant un troisième nombre dual ayant un nombre infinitésimal associé à une exécution différente du programme d'opérateur dérivé, (i) extraire une deuxième tangente par rapport au nombre infinitésimal associé à l'exécution respective du programme d'opérateur dérivé à partir d'une primale du troisième nombre dual par rapport au nombre infinitésimal associé à l'exécution différente du programme d'opérateur dérivé, (ii) extraire une troisième tangente par rapport au nombre infinitésimal associé à l'exécution respective du programme d'opérateur dérivé à partir d'une tangente du troisième nombre dual par rapport au nombre infinitésimal associé à l'exécution différente du programme d'opérateur dérivé, et (iii) déterminer la première tangente comme un nombre dual formé avec la deuxième tangente comme primale, avec la troisième tangente comme tangente, et avec le nombre infinitésimal associé à l'exécution différente du programme d'opérateur dérivé;

où, pour chaque exécution de la construction de programme de l'opérateur de dérivation, l'extraction de la première tangente comprend:

en réponse au premier résultat définissant une troisième fonction mathématique qui prend un deuxième argument en entrée, (i) déterminer un deuxième résultat en substituant, dans le deuxième argument, chaque occurrence du nombre infinitésimal associé à l'exécution respective du programme d'opérateur dérivé par un nombre infinitésimal temporaire ayant une étiquette unique temporaire, (ii) déterminer un troisième résultat en appliquant la troisième fonction mathématique au deuxième résultat, (iii) extraire du troisième résultat une quatrième tangente par rapport au nombre infinitésimal associé à l'exécution respective du programme d'opérateur dérivé, et (iv) déterminer la première tangente en substituant, dans la quatrième tangente, chaque occurrence du nombre infinitésimal temporaire ayant l'étiquette unique temporaire au nombre infinitésimal associé à l'exécution respective du programme d'opérateur dérivé;

la première fonction mathématique est une fonction dont l'étendue et le domaine sont tous deux des fonctions, la première fonction mathématique prenant le premier argument et un second argument comme entrées;

où, pour chaque exécution respective de la construction de programme de l'opérateur de dérivation, la détermination de la seconde fonction mathématique comprend:

former un premier paquet avec le premier argument et le second argument et par rapport à un nombre infinitésimal ayant une étiquette unique qui l'associe de manière unique à l'exécution respective de la construction de programme de l'opérateur de dérivation;

déterminer un premier résultat en appliquant la première fonction mathématique avec la première liasse respective comme entrée; et

extraire une première tangente du premier résultat par rapport au nombre infinitésimal associé à l'exécution respective du programme de construction de l'opérateur de dérivation.

**2.** Méthode selon la revendication 1, la détermination de la seconde fonction mathématique comprenant:
déterminer la deuxième fonction mathématique en utilisant l'une des méthodes suivantes: i) différenciation automatique en mode direct, ii) différenciation automatique en mode inverse, iii) différenciation automatique en mode inverse basée sur le point de contrôle, et iii) différenciation automatique en mode hybride.

**3.** Méthode selon la revendication 1, la détermination de la deuxième fonction mathématique comprenant:

l'expansion de l'eta de la première fonction mathématique jusqu'à ce que toutes les exécutions multiples de la construction du programme de l'opérateur de dérivation aboutissent à des résultats ne contenant pas de fonction, où l'expansion de l'eta est effectuée avant la formation du premier nombre dual, la détermination du premier résultat et l'extraction de la première tangente, pour chacune des multiples exécutions de la construction de programme de l'opérateur de dérivée.

**4.** Méthode selon la revendication 3, la détermination de la deuxième fonction mathématique comprenant:
déterminer la seconde fonction mathématique en tant que résultat des multiples exécutions de la construction du programme de l'opérateur de dérivation dans l'expansion de l'eta de la première fonction mathématique.

**5.** La méthode selon la revendication 1, dans chaque cas, la substitution comprenant:

déterminer une sortie respective en substituant, dans une entrée respective, chaque occurrence d'un nombre infinitésimal ayant une deuxième étiquette unique à un nombre infinitésimal ayant une première étiquette unique, où, en réponse à l'entrée respective définissant un nombre réel, la sortie respective est déterminée comme étant égale à l'entrée respective, et

où, en réponse à l'entrée respective définissant un quatrième nombre dual ayant seulement des nombres infinitésimaux ayant la première étiquette unique, la sortie respective est déterminée en substituant, dans le quatrième nombre dual, chaque occurrence du nombre infinitésimal ayant la deuxième étiquette unique avec le nombre infinitésimal ayant la première étiquette unique.

**6.** La méthode selon la revendication 5, où, en réponse à l'entrée respective définissant un cinquième nombre dual ayant des nombres infinitésimaux ayant une troisième étiquette unique, la sortie respective est déterminée en (i) déterminant un quatrième résultat en substituant chaque occurrence du nombre infinitésimal ayant la deuxième étiquette unique avec le nombre infinitésimal ayant la première étiquette unique, dans une primale du cinquième nombre dual par rapport aux nombres infinitésimaux ayant la troisième étiquette unique, (ii) déterminer un cinquième résultat en substituant chaque occurrence du nombre infinitésimal ayant la deuxième étiquette unique avec le nombre infinitésimal ayant la première étiquette unique dans une tangente du cinquième nombre dual par rapport aux nombres infinitésimaux ayant la troisième étiquette unique, et (iii) déterminer la sortie respective comme un nombre dual formé avec le quatrième résultat comme primal, avec le cinquième résultat comme tangent, et avec le nombre infinitésimal ayant la troisième étiquette unique.

**7.** La méthode selon la revendication 5, où, en réponse à l'entrée respective définissant une quatrième fonction mathématique qui prend un troisième argument comme entrée, (i) déterminer un sixième résultat en substituant chaque occurrence du nombre infinitésimal ayant la deuxième étiquette unique avec le nombre infinitésimal ayant une étiquette unique temporaire dans le troisième argument, (ii) déterminer un septième résultat en appliquant la quatrième fonction mathématique au sixième résultat, (iii) déterminer un huitième résultat en substituant chaque occurrence du nombre infinitésimal ayant la deuxième étiquette unique avec le nombre infinitésimal ayant la première étiquette unique dans le septième résultat, et (v) déterminer la sortie respective en substituant chaque occurrence du nombre infinitésimal ayant l'étiquette unique temporaire avec le nombre infinitésimal ayant la deuxième étiquette unique dans le sixième résultat.

8.  Méthode de la revendication 1, la détermination de la deuxième fonction mathématique comprenant:

    l'expansion de l'eta de la première fonction mathématique jusqu'à ce que toutes les exécutions multiples de la construction du programme de l'opérateur de dérivation aboutissent à des résultats ne contenant pas de fonction, où l'expansion de l'eta est effectuée avant la formation du premier faisceau, la détermination du premier résultat et l'extraction de la première tangente, pour chacune des multiples exécutions de la construction de programme de l'opérateur de dérivation.

9.  Procédé selon la revendication 8, pour chaque exécution de la construction du programme de l'opérateur de dérivation, la formation du premier paquet comprenant:

    en réponse au premier argument ne définissant pas une fonction et au second argument ne définissant pas une fonction, déterminer le premier faisceau comme un nombre dual formé avec le premier argument comme primal, avec le second argument comme tangent et avec le nombre infinitésimal associé à l'exécution respective de la construction de programme de l'opérateur de dérivation; et

    en réponse au premier argument définissant une troisième fonction mathématique qui prend un troisième argument en entrée et au deuxième argument définissant une quatrième fonction mathématique qui prend le troisième argument en entrée, (i) déterminer un deuxième résultat en appliquant la troisième fonction mathématique avec le troisième argument en entrée, (ii) déterminer un troisième résultat en appliquant la quatrième fonction mathématique avec le troisième argument comme entrée, et (iii) déterminer le premier paquet comme un nombre dual formé avec le deuxième résultat comme primal, avec le troisième résultat comme tangent, et avec le nombre infinitésimal associé à l'exécution respective de la construction du programme de l'opérateur de dérivée.

10. Procédé selon la revendication 1, pour chaque exécution de la construction du programme de l'opérateur de dérivation, la formation du premier paquet comprenant:

    en réponse au premier argument ne définissant pas une fonction et au second argument ne définissant pas une fonction, déterminer le premier faisceau comme un nombre dual formé avec le premier argument comme primal, avec le second argument comme tangent et avec le nombre infinitésimal associé à l'exécution respective de la construction de programme de l'opérateur de dérivation; et

    en réponse au premier argument définissant une troisième fonction mathématique qui prend un troisième argument comme entrée et au deuxième argument définissant une quatrième fonction mathématique qui prend le troisième argument comme entrée, (i) déterminer un deuxième résultat en substituant, dans le troisième argument, chaque occurrence du nombre infinitésimal associé à l'exécution respective de la construction de programme de l'opérateur de dérivation avec un nombre infinitésimal temporaire ayant une étiquette unique temporaire, (ii) déterminer un troisième résultat en appliquant la troisième fonction mathématique avec le troisième argument comme entrée, (iii) déterminer un quatrième résultat en appliquant la quatrième fonction mathématique avec le troisième argument comme entrée, (iii) déterminer un quatrième résultat en appliquant la quatrième fonction mathématique avec le troisième argument comme entrée, (iv) déterminer un deuxième paquet comme un nombre dual formé avec le troisième résultat comme primal, avec le quatrième résultat comme tangent, et avec le nombre infinitésimal associé à l'exécution respective du programme d'opérateur dérivé, et (v) déterminer le premier paquet en substituant, dans le deuxième paquet, chaque occurrence du nombre infinitésimal ayant une étiquette unique temporaire avec le nombre infinitésimal associé à l'exécution respective du programme d'opérateur dérivé.

11. Système de différenciation automatique d'une fonction définie par un code de programme, le système comprenant:

    au moins une mémoire configurée pour stocker des instructions de programme comprenant un programme de différenciation automatique (112) ayant une construction de programme d'opérateur dérivé qui met en œuvre un opérateur dérivé mathématique; et

    au moins un processeur (102) configuré pour exécuter les instructions de programme stockées dans au moins une mémoire afin de mettre en œuvre la méthode de l'une des revendications 1 à 10.

12. Support non transitoire lisible par ordinateur pour la différenciation automatique d'une fonction définie par un code de programme, le support lisible par ordinateur stockant des instructions de programme qui, lorsqu'elles sont exécutées par au moins un processeur (102), amènent ce dernier à mettre en œuvre la méthode de l'une des revendications 1 à 10.

**100**

**Automatic Differentiation System**

**102** — Processor

**106** — Comm Module

**104** — Memory

**108** — Display Screen

**112** — Automatic Differentiation Program

**110** — User Interface

**FIG. 1**

**200**

┌─ 210

Store an automatic differentiation program, the automatic differentiation program including a program construct $\mathscr{D}$ that implements the mathematical derivative operator.

┌─ 230

Receive first program code defining a function $f$, the function $f$ being a higher-order function, which takes an argument $x$ as input.

┌─ 250

Determine, using the automatic differentiation program, a function $f'$ which is the derivative of the function $f$, the determination of the function $f'$ including multiple executions of the program construct $\mathscr{D}$, each execution being distinguished from one another using unique tags.

┌─ 270

Return, output, or store at least one of (i) second program code defining function $f'$, and (ii) a result of the function $f'$ at one or more values for the argument $x$.

**FIG. 2**

300

```
#!r6rs

(define-record-type dual-number (fields epsilon primal tangent))

(define *epsilon* 0)                          304

(define (generate-epsilon)
 (set! *epsilon* (+ *epsilon* 1))
 *epsilon*)

(define (prim epsilon x)
 (cond ((real? x) x)
       ((dual-number? x)
        (if (= (dual-number-epsilon x) epsilon)
            (dual-number-primal x)
            (make-dual-number (dual-number-epsilon x)
                              (prim epsilon (dual-number-primal x))
                              (prim epsilon (dual-number-tangent x)))))
       ((procedure? x) (lambda (y) (prim epsilon (x y))))
       (else (error "C"))))

(define (tg epsilon x)
 (cond ((real? x) 0)                          ; Equation (8a)    302
       ((dual-number? x)
        (if (= (dual-number-epsilon x) epsilon)
            ;; Equation (8b)
            (dual-number-tangent x)
            ;; Equation (8c)
            (make-dual-number (dual-number-epsilon x)
                              (tg epsilon (dual-number-primal x))
                              (tg epsilon (dual-number-tangent x)))))
       (else (error "D"))))

(define (bun epsilon x x-prime)
 (cond ((and (or (real? x) (dual-number? x))       308
             (or (real? x-prime) (dual-number? x-prime)))
        ;; Equation (30a)
        (make-dual-number epsilon x x-prime))
       ((and (procedure? x) (procedure? x-prime))
        ;; Equation (30b)
        (lambda (y) (bun epsilon (x y) (x-prime y))))
       (else (error "E"))))
```

**FIG. 3A**

— 300

```
(define (lift-real->real f df/dx)
 (letrec ((self (lambda (x)
               (if (dual-number? x)
                   (let ((epsilon (dual-number-epsilon x)))
                    (bun epsilon
                        (self (prim epsilon x))
                        (d* (df/dx (prim epsilon x)) (tg epsilon x))))
                   (f x)))))
  self))

(define (lift-real*real->real f df/dx1 df/dx2)
 (letrec ((self (lambda (x1 x2)
               (if (or (dual-number? x1) (dual-number? x2))
                   (let ((epsilon (if (dual-number? x1)
                                    (dual-number-epsilon x1)
                                    (dual-number-epsilon x2))))
                    (bun epsilon
                        (self (prim epsilon x1) (prim epsilon x2))
                        (d+ (d* (df/dx1 (prim epsilon x1) (prim epsilon x2))
                               (tg epsilon x1))
                           (d* (df/dx2 (prim epsilon x1) (prim epsilon x2))
                               (tg epsilon x2)))))
                   (f x1 x2)))))
  self))

;;; Equation (5a)
(define d+ (lift-real*real->real + (lambda (x1 x2) 1) (lambda (x1 x2) 1)))

;;; Equation (5b)
(define d* (lift-real*real->real * (lambda (x1 x2) x2) (lambda (x1 x2) x1)))

(define dexp (lift-real->real exp (lambda (x) (dexp x))))

(define (j* f)
 (lambda (x x-prime)
  (if (procedure? (f x))
      ;; Equation (32a)
      (lambda (y) ((j* (lambda (x) ((f x) y))) x x-prime))
      ;; Equation (32b)
      (let ((epsilon (generate-epsilon)))
       (tg epsilon (f (bun epsilon x x-prime)))))))

(define (d f)
 (lambda (x)
  (if (procedure? (f x))
      ;; Equation (18a)
      (lambda (y) ((d (lambda (x) ((f x) y))) x))
      ;; Equation (18b)
      (let ((epsilon (generate-epsilon)))
       (tg epsilon (f (make-dual-number epsilon x 1)))))))
```

310

306

**FIG. 3B**

**400**

```
#!r6rs

(define-record-type dual-number (fields epsilon primal tangent))

(define *epsilon* 0)                          406

(define (generate-epsilon)
 (set! *epsilon* (+ *epsilon* 1))
 *epsilon*)

(define (subst epsilon1 epsilon2 x)
 (cond ((real? x) x)                          ; Equation (24a)
       ((dual-number? x)                                             404
       (if (= (dual-number-epsilon x) epsilon2)
           ;; Equation (24b)
           (make-dual-number
            epsilon1 (dual-number-primal x) (dual-number-tangent x))
           ;; Equation (24c)
           (make-dual-number
            (dual-number-epsilon x)
            (subst epsilon1 epsilon2 (dual-number-primal x))
            (subst epsilon1 epsilon2 (dual-number-tangent x)))))
       ((procedure? x)
       ;; Equation (24d)
       (lambda (y)
        (let ((epsilon3 (generate-epsilon)))
         (subst epsilon2 epsilon3
              (subst epsilon1 epsilon2 (x (subst epsilon3 epsilon2 y)))))))
       (else (error "B"))))

(define (prim epsilon x)
 (cond ((real? x) x)
       ((dual-number? x)
       (if (= (dual-number-epsilon x) epsilon)
           (dual-number-primal x)
           (make-dual-number (dual-number-epsilon x)
                             (prim epsilon (dual-number-primal x))
                             (prim epsilon (dual-number-tangent x)))))
       ((procedure? x)
       (lambda (y)
        (let ((epsilon2 (generate-epsilon)))
         (subst epsilon
              epsilon2
              (prim epsilon (x (subst epsilon2 epsilon y)))))))
       (else (error "C"))))
```

# FIG. 4A

**400**

```
(define (tg epsilon x)
 (cond ((real? x) 0)                           ; Equation (8a)
       ((dual-number? x)
        (if (= (dual-number-epsilon x) epsilon)        402
            ;; Equation (8b)
            (dual-number-tangent x)
            ;; Equation (8c)
            (make-dual-number (dual-number-epsilon x)
                        (tg epsilon (dual-number-primal x))
                        (tg epsilon (dual-number-tangent x)))))
       ((procedure? x)
        ;; Equation (23)
        (lambda (y)
         (let ((epsilon2 (generate-epsilon)))
           (subst epsilon
                  epsilon2
                  (tg epsilon (x (subst epsilon2 epsilon y)))))))
       (else (error "D"))))

(define (bun epsilon x x-prime)
 (cond ((and (or (real? x) (dual-number? x))
             (or (real? x-prime) (dual-number? x-prime)))
        ;; Equation (30a)
        (make-dual-number epsilon x x-prime))
       ((and (procedure? x) (procedure? x-prime))        410
        ;; Equation (31)
        (lambda (y)
         (let ((epsilon2 (generate-epsilon)))
           (subst epsilon epsilon2
                  (bun epsilon
                       (x (subst epsilon2 epsilon y))
                       (x-prime (subst epsilon2 epsilon y)))))))
       (else (error "E"))))
```

## FIG. 4B

400

```
(define (lift-real->real f df/dx)
 (letrec ((self (lambda (x)
               (if (dual-number? x)
                   (let ((epsilon (dual-number-epsilon x)))
                    (bun epsilon
                        (self (prim epsilon x))
                        (d* (df/dx (prim epsilon x)) (tg epsilon x))))
                   (f x)))))
  self))

(define (lift-real*real->real f df/dx1 df/dx2)
 (letrec ((self (lambda (x1 x2)
               (if (or (dual-number? x1) (dual-number? x2))
                   (let ((epsilon (if (dual-number? x1)
                                    (dual-number-epsilon x1)
                                    (dual-number-epsilon x2))))
                    (bun epsilon
                        (self (prim epsilon x1) (prim epsilon x2))
                        (d+ (d* (df/dx1 (prim epsilon x1) (prim epsilon x2))
                              (tg epsilon x1))
                           (d* (df/dx2 (prim epsilon x1) (prim epsilon x2))
                              (tg epsilon x2)))))
                   (f x1 x2)))))
  self))

;;; Equation (5a)
(define d+ (lift-real*real->real + (lambda (x1 x2) 1) (lambda (x1 x2) 1)))

;;; Equation (5b)
(define d* (lift-real*real->real * (lambda (x1 x2) x2) (lambda (x1 x2) x1)))

(define dexp (lift-real->real exp (lambda (x) (dexp x))))

(define (j* f)                    412
 (lambda (x x-prime)
  ;; Equation (33)
  (let ((epsilon (generate-epsilon)))
   (tg epsilon (f (bun epsilon x x-prime))))))

(define (d f)                     408
 (lambda (x)
  ;; Equation (8d)
  (let ((epsilon (generate-epsilon)))
   (tg epsilon (f (make-dual-number epsilon x 1))))))
```

**FIG. 4C**

# EP 3 963 482 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62840387
- US 20090077543 A1
- US 8281299 B2

### Non-patent literature cited in the description

- **MANZYUK OLEKSANDR et al.** Perturbation confusion in forward automatic differentiation of higher-order functions. *JOURNAL OF FUNCTIONAL PROGRAMMING*, 17 March 2018, vol. 29, ISSN 0956-7968
- Automatic differentiation in machine learning: a survey. **ATILM GUNES BAYDIN et al.** ARXIV.ORG. CORNELL UNIVERSITY LIBRARY, 20 February 2015
- **OLIVIER DANY et al.** Eta-expansion does The Trick. *ACM TRANSACTIONS ON PROGRAMMING LANGUAGE AND SYSTEMS, ACM*, 01 November 1996, vol. 18 (6), ISSN 0164-0925, 730-751